# EUROPEAN PATENT SPECIFICATION

(11) **EP 4 189 268 B1**
(45) Date of publication and mention of the grant of the patent: **08.10.2025**
(21) Application number: 21754919.5
(22) Date of filing: 29.07.2021
(51) Int. Cl.: F16L 1/20, E21B 17/01, F16L 1/24, F16L 3/10

(54) **APPARATUS FOR SECURING TO AN OUTER SURFACE OF A SEGMENT OF FLEXIBLE PIPE BODY AND SECURING METHOD THEREOF**
VORRICHTUNG ZUM BEFESTIGEN AN EINER AUSSENFLÄCHE EINES SEGMENTS EINES FLEXIBLEN ROHRKÖRPERS UND VERFAHREN ZUR BEFESTIGUNG
APPAREIL POUR LA FIXATION À UNE SURFACE EXTÉRIEURE D'UN SEGMENT DE CORPS DE TUYAU FLEXIBLE ET MÉTHODE DE FIXATION ASSOCIÉE

(30) Priority: 31.07.2020 GB 202011954
(43) Date of publication of application: 07.06.2023
(73) Proprietor: Baker Hughes Energy Technology UK Limited, Bristol BS48 1BS (GB)
(72) Inventor: ARNOLD, Andrew, Newcastle-Upon-Tyne NE63PF (GB)
(74) Representative: Novagraaf Group
(86) International application number: PCT/EP2021/025290
(87) International publication number: WO 2022/022859

(56) References cited:
- WO-A1-2017/194066
- KR-A- 20150 037 296
- US-A1- 2018 252 334

## Description

The present invention relates to a method and apparatus for determining a location of auxiliary equipment mounted to flexible pipe body of a flexible pipe. In particular, but not exclusively, the present invention relates to a clamping mechanism that can be utilised to secure auxiliary equipment such as a buoyancy module at a desired longitudinal position along a flexible pipe or which can be used in a stopper clamp to prevent undesired motion of auxiliary equipment beyond a predetermined position along the flexible pipe.

KR 2015 0037296 A discloses a cable cleat and EP3341637B1 or WO2017194066A1, discloses a buoyancy clamp assembly mountable around an underwater pipe.

Traditionally flexible pipe is utilised to transport production fluids, such as oil and/or gas and/or water, from one location to another. Flexible pipe is particularly useful in connecting a sub-sea location (which may be deep underwater, say 1000 metres or more) to a sea level location. The pipe may have an internal diameter of typically up to around 0.6 metres (e.g. diameters may range from 0.05 m up to 0.6 m). A flexible pipe is generally formed as an assembly of flexible pipe body and one or more end fittings. The pipe body is typically formed as a combination of layered materials that form a pressure-containing conduit. The pipe structure allows large deflections without causing bending stresses that impair the pipe's functionality over its lifetime. There are different types of flexible pipe such as unbonded flexible pipe which is manufactured in accordance with API 17J or composite type flexible pipe or the like. The pipe body is generally built up as a combined structure including polymer layers and/or composite layers and/or metallic layers. For example, pipe body may include polymer and metal layers, or polymer and composite layers, or polymer, metal and composite layers. Layers may be formed from a single piece such as an extruded tube or by helically winding one or more wires at a desired pitch or by connecting together multiple discrete hoops that are arranged concentrically side-by-side. Depending upon the layers of the flexible pipe used and the type of flexible pipe some of the pipe layers may be bonded together or remain unbonded.

Some flexible pipe has been used for deep water (less than 3,300 feet (1,005.84 metres)) and ultra-deep water (greater than 3,300 feet) developments. It is the increasing demand for oil which is causing exploration to occur at greater and greater depths (for example in excess of 8202 feet (2500 metres)) where environmental factors are more extreme. For example in such deep and ultra-deep water environments ocean floor temperature increases the risk of production fluids cooling to a temperature that may lead to pipe blockage. In practice flexible pipe conventionally is designed to perform at operating temperatures of -30°C to +130°C, and is being developed for even more extreme temperatures. Increased depths also increase the pressure associated with the environment in which the flexible pipe must operate. For example, a flexible pipe may be required to operate with external pressures ranging from 0.1 MPa to 30 MPa acting on the pipe. Equally, transporting oil, gas or water may well give rise to high pressures acting on the flexible pipe from within, for example with internal pressures ranging from zero to 140 MPa from bore fluid acting on the pipe. As a result the need for high levels of performance from certain layers such as a pipe carcass or a pressure armour or a tensile armour layer of the flexible pipe body is increased. It is noted for the sake of completeness that flexible pipe may also be used for shallow water applications (for example less than around 500 metres depth) or even for shore (overland) applications.

From time to time it is desirable to be able to secure auxiliary equipment at a desired position along a length of flexible pipe body. For example buoyancy modules may be required to help the flexible pipe conform to a desired profile in use. Alternatively from time to time it is desirable to provide a so-called stopper clamp on the flexible pipe body which helps prevent other elements running too far along the flexible pipe body by accident. Regardless of the particular use it is from time to time desirable to provide a mechanism which can be used to secure on to the outer surface of flexible pipe body. It will be appreciated that this outer surface is often provided by an outer sheath of flexible pipe body and this can present an otherwise relatively smooth surface.

For example with respect to buoyancy modules, internal clamps are conventionally fitted to flexible risers allowing buoyancy module segments to mechanically lock at a required location along the flexible riser. Such buoyancy modules have an internal recess which transfers buoyant forces to each clamp and thus to the flexible riser. Buoyancy module internal clamps are conventionally subjected to forces of up to 3 tons and require over engineering to resist against slippage. Considering the magnitude of applied loads the design of a conventional internal clamp is often a challenge in maintaining a relatively small profile to maximise buoyancy from the buoyancy module segments whilst still attaining a desired level of fixation. In practice due to the low coefficient of friction between flexible pipe layers internal clamps conventionally require high compression to prevent undesired sliding along a predetermined longitudinal position of a flexible pipe. Conventionally this compression is generally applied via a strap based clamping force. This transmits compression through clamp segments. The conventional strap system and adjoining fasteners are subjected to high tensions requiring high strength material such as aramid fibre strips and titanium fasteners. Conventional clamping mechanisms thus often rely on applying enough radial compression to clamp onto underlying layers such as tensile armour wires.

Stopper clamps are another conventional device that can be secured at a desired location along a longitudinal length of flexible pipe body. Such stopper clamps are often utilised in vertically hung flexible pipes below a bend stiffener. The bend stiffener is utilised close to a rigid structure to which an end fitting of the flexible pipe is secured in use. A bend stiffener is utilised close to a connector or end fitting so as to gradually moderate a stiffness of the flexible pipe. This prevents over bending stresses which might damage the flexible pipe body being generated if a portion of the flexible pipe body, which may for example rise and fall with the sea level, is moved with respect to the rigid structure.

When the connector or end fitting is secured to the rigid structure, the bend stiffener, which is itself a bulky component which may have a mass in excess of 500 kgs, must be slid along the flexible pipe to a desired location. This forms part of a tie-in process. During this process the bend stiffener and portion of flexible pipe body are typically orientated in a vertical direction. If the bend stiffener is unsupported partially or wholly due to an error during assembly the bend stiffener can plummet down the length of the pipe by virtue of gravitational force. This can be highly inconvenient, particularly if the flexible pipe body is long. In order to overcome such problems stopper clamps have been proposed which are located a predetermined distance from a location where the bend stiffener is to be secured. If during assembly a mistake is made and a bend stiffener is accidently left unsupported, the bend stiffener will drop but only to a predetermined depth, for example 3 metres, to a location where the stopper clamp is clamped to the flexible pipe. Stopper clamps thus require a strong clamping force able to resist impact forces caused by a heavy bend stiffener. Such strong forces can only conventionally be provided via mechanisms that can fail and/or that risk damage to a part or parts of the flexible pipe body itself.

It is an aim of the present invention to at least partly mitigate one or more of the above-mentioned problems.

It is an aim of certain embodiments of the present invention to provide a method and apparatus for securing to an outer surface of flexible pipe body.

It is an aim of certain embodiments of the present invention to provide a stopper clamp or buoyancy clamp or other such securing/fixation element at a desired location whereby the fixation methodology provides strong clamping forces but does not require costly high strength materials for its manufacture or reduces the required quantities/volumes of costly materials such as qualified materials as set out in API 17L.

It is an aim of certain embodiments of the present invention to provide a clamp assembly which includes separate inner and outer segments that cooperate in a mating fashion so that clamping pressure actually increases as applied force (for example due to weight of a dropping bend stiffener or the buoyancy element uplift force provided by a massive buoyancy element) increases.

It is an aim of certain embodiments of the present invention to provide a clamping mechanism that provides greater clamping efficiency and/or reduces overall clamp size and/or reduces the need for high capacity strap system components as typically required by conventional clamping mechanisms.

The present invention is defined in the accompanying claims.

According to a first aspect of the present invention there is provided an apparatus for securing to an outer surface of a segment of flexible pipe body according to the technical features of claim 1.

Aptly each clamping surface region comprises at least a portion of a lateral surface of a truncated right circular cone.

Aptly each inner body member comprises a ring-like element comprising, in cross section, an inside surface that is flat or gently arcuate for abutting against an outer surface of the flexible pipe body and providing a cylindrical or generally cylindrical abutment surface.

Aptly each inner body member comprises a ring-like element comprising, in cross section, an outside surface that is inclined and constantly flares outwards from a first edge of the ring-like element to a remaining edge of the ring-like element.

Aptly each inner body member comprises a ring-like element comprising, in cross section, an outside surface that is V-shaped having a thinner thickness at respective edges of the ring-like element and a greatest thickness at a central region of the ring-like element.

Aptly each inner body member comprises a ring-like element comprising, in cross section, an outside surface comprising a plurality of flattened V-shaped surfaces.

Aptly each ring-like element comprises a plurality of arcuate ring portions locatable end-to-end in a circle and the combined outer surface of each ring portion provides said an outer surface.

Aptly each inner body member comprises a finger-like element aligned substantially parallel to the primary axis of the flexible pipe comprising, in cross section, an inside surface that is flat or gently arcuate for abutting against an outer surface of the flexible pipe body.

Aptly each inner body member comprises a finger-like element comprising, in cross section, an outside surface that is inclined and constantly flares outwards from a first end of the finger-like element to a remaining end of the finger-like element.

Aptly each inner body member comprises a finger-like element comprising, in cross section, an outside surface that is V-shaped having a thinner thickness at respective ends of the finger-like element and a greatest thickness at a central region of the finger-like element or that comprises an undulating-shaped surface.

Aptly the apparatus further comprises at least one securing element for securing a first outer body member to a further outer body member and, as the first and further outer body members are secured together, squeezing the inner clamp portion between the outer clamp portion and the flexible pipe body.

Aptly the apparatus further comprises at least one securing element for securing a first outer body member to a further outer body member and, as the first and further outer body members are secured together, squeezing the inner clamp portion between the outer clamp portion and the flexible pipe body.

Aptly the apparatus further comprises at least one still further outer body member, disposed circumferentially between the first and further outer body members, each pivotally connected to two adjacent outer body members.

Aptly each outer body member comprises a ring-like element comprising, in cross section, an inside surface that is inclined and constantly flares outwards from a first edge of the ring-like element to a remaining edge of the ring-like element.

Aptly each outer body member comprises a ring-like element comprising, in cross section, an inside surface that is V-shaped having a thinner thickness at respective edges of the ring-like element and a greatest thickness at a central region of the ring-like element.

According to a second aspect of the present invention there is provided a buoyancy module according to the technical features of claim 16.

According to a third aspect of the present invention there is provided a stopper clamp according to the technical features of claim 17.

According to a fourth aspect of the present invention there is provided a swivel or tether clamp according to the technical features of claim 17.

According to a fifth aspect of the present invention there is provided a method of securing to an outer surface of a segment of flexible pipe body at a desired longitudinal position along the flexible pipe body according to the method steps of claim 18.

Aptly the method further comprises providing the inner body members by locating a plurality of ring-like elements around the flexible pipe body in a coaxial spaced apart relationship.

Aptly the method further comprises providing the inner body members by locating a plurality of finger-like elements side-by-side circumferentially around the flexible pipe body.

Aptly the method further comprises subsequent to the outer clamp portion being secured around the inner clamp portion at a desired longitudinal position, urging opposed inclined surfaces of opposed clamping surface regions of the inner and outer body members to ride along each other thereby urging at least one of the inner body members against an outer sheath of the flexible pipe body.

Aptly the method further comprises simultaneously urging a plurality of opposed clamping surface regions together along an axial extent of the inner and outer clamp portions thereby spreading out a radially inwards exerted clamping force caused by axial force being applied to the outer clam portion.

Aptly the method further comprises applying a preload pressure to the inner and outer clamp portions by securing a first outer body member to a further outer body member around a segment of flexible pipe body thereby securing the inner and outer clamp portions at a desired longitudinal position.

Aptly the method further comprises providing the outer body members by locating a plurality of ring-like elements around the inner clamp portion in a coaxial spaced apart relationship.

Certain embodiments of the present invention provide a method and apparatus of securing at a desired longitudinal position on an outer surface of a segment of flexible pipe body.

Certain embodiments of the present invention provide a method and apparatus for clamping which utilises forces which might otherwise overcome a clamping force to drive increased clamping pressures.

Certain embodiments of the present invention provide apparatus for securing at a desired longitudinal position which utilises an outer clamp body and inner clamp body that have mating opposed surfaces. As one clamp body is driven in an opposite direction with respect to a remaining clamp body the mating surfaces operate to transfer longitudinal force into radial force.

Certain embodiments of the present invention provide a method of securing a target object by clamping. Clamping creates a radially inward force squeezing a clamp body onto and around an outer surface of an outer sheath of flexible pipe body. The circumferential extending squeezing effect acts in a radially inwards motion all the way around the pipe body and this radially inwards directed force is generated by a transfer mechanism produced by opposed surfaces of separate components so that a force generated in an axial motion is turned into clamping force. As the longitudinal force increases the clamping force increases accordingly.

Certain embodiments of the present invention provide a stopper clamp or buoyancy module clamp or the like with improved characteristics relative to conventional clamps.

Certain embodiments of the present invention will now be described hereinafter, by way of example only, with reference to the accompanying drawings in which:
Figure 1 illustrates flexible pipe body;
Figure 2 illustrates certain uses of a flexible pipe;
Figure 3 illustrates a clamping apparatus secured around a section of flexible pipe body;
Figure 4 illustrates a finger-like element;
Figure 5 illustrates a different viewpoint of a finger-like element;
Figures 6a, 6b, and 6c illustrate schematic diagrams of various outer and inner clamp portions;
Figure 7 illustrates a finger-like element in abutment with a section of flexible pipe body and an outer body member;
Figure 8 illustrates an alternative embodiment of a clamping apparatus;
Figure 9 illustrates the clamping apparatus of Figure 8 from a different view point;
Figure 10 illustrates the clamping apparatus of Figure 8 secured around a section of flexible pipe body;
Figures 11a and 11b illustrate the clamping apparatus of Figure 8 secured around a section of flexible pipe body from a different viewpoint;
Figure 12 illustrates an alternative embodiment of an inner clamp portion;
Figure 13 illustrates a variety of complimentary cross-sectional profiles of an inner and outer clamp portion;
Figure 14 illustrates the clamping apparatus of Figure 8 from a perspective viewpoint;
Figure 15 illustrates the clamping apparatus of Figure 8, when secured around a section of flexible pipe body, from an "end on" viewpoint;
Figure 16 illustrates a portion of the clamping apparatus of Figure 8 from a different viewpoint;
Figure 17 illustrates a buoyancy module including a clamping apparatus;
Figure 18 illustrates a stopper clamp for limiting motion of a bend stiffener;
Figure 19 illustrates a further buoyancy module including a clamping apparatus;
Figure 20 illustrates a swivel clamp secured around a section of flexible pipe body;
Figure 21 illustrates the swivel clamp of Figure 20 from a different viewpoint;
Figure 22 illustrates the swivel clamp of Figure 20 when under a longitudinal external force; and
Figure 23 illustrates a section of the swivel clamp of Figure 22 in more detail.

In the drawings like reference numerals refer to like parts.

Throughout this description, reference will be made to a flexible pipe. It is to be appreciated that certain embodiments of the present invention are applicable to use with a wide variety of flexible pipe. For example certain embodiments of the present invention can be used with respect to flexible pipe body and associated end fittings of the type which is manufactured according to API 17J. Such flexible pipe is often referred to as unbonded flexible pipe. Other embodiments are associated with other types of flexible pipe.

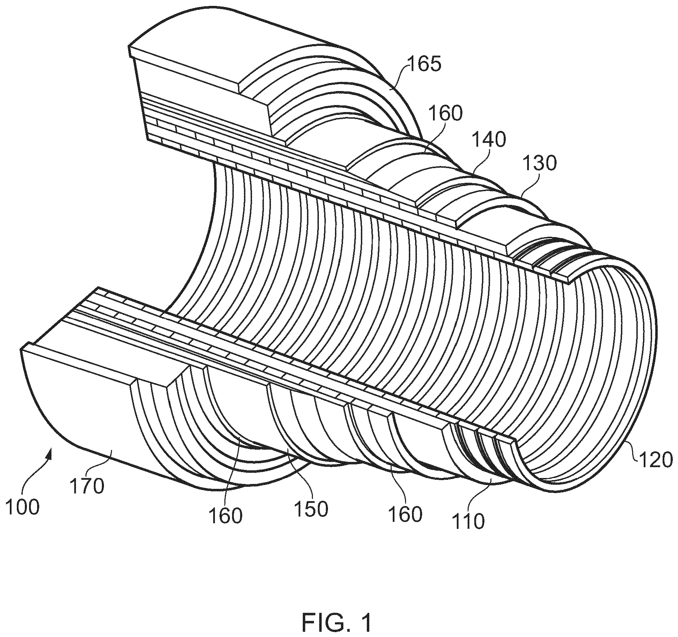

Turning to Figure 1 it will be understood that the illustrated flexible pipe is an assembly of a portion of pipe body and one or more end fittings (not shown) in each of which a respective end of the pipe body is terminated. Figure 1 illustrates how pipe body 100 is formed from a combination of layered materials that form a pressure-containing conduit. As noted above although a number of particular layers are illustrated in Figure 1, it is to be understood that certain embodiments of the present invention are broadly applicable to coaxial pipe body structures including two or more layers manufactured from a variety of possible materials. The pipe body may include one or more layers comprising composite materials, forming a tubular composite layer. It is to be further noted that the layer thicknesses are shown for illustrative purposes only. As used herein, the term "composite" is used to broadly refer to a material that is formed from two or more different materials, for example a material formed from a matrix material and reinforcement fibres.

A tubular composite layer is thus a layer having a generally tubular shape formed of composite material. Alternatively a tubular composite layer is a layer having a generally tubular shape formed from multiple components one or more of which is formed of a composite material.

The layer or any element of the composite layer may be manufactured via an extrusion, pultrusion or deposition process or, by a winding process in which adjacent windings of tape which themselves have a composite structure are consolidated together with adjacent windings. The composite material, regardless of manufacturing technique used, may optionally include a matrix or body of material having a first characteristic in which further elements having different physical characteristics are embedded. That is to say elongate fibres which are aligned to some extent or smaller fibres randomly orientated can be set into a main body or spheres or other regular or irregular shaped particles can be embedded in a matrix material, or a combination of more than one of the above. Aptly the matrix material is a thermoplastic material, aptly the thermoplastic material is polyethylene or polypropylene or nylon or PVC or PVDF or PFA or PEEK or PTFE or alloys of such materials with reinforcing fibres manufactured from one or more of glass, ceramic, basalt, carbon, carbon nanotubes, polyester, nylon, aramid, steel, nickel alloy, titanium alloy, aluminium alloy or the like or fillers manufactured from glass, ceramic, carbon, metals, buckminsterfullerenes, metal silicates, carbides, carbonates, oxides or the like.

The pipe body 100 illustrated in Figure 1 includes an internal pressure sheath 110 which acts as a fluid retaining layer and comprises a polymer layer that ensures internal fluid integrity. The layer provides a boundary for any conveyed fluid. It is to be understood that this layer may itself comprise a number of sub-layers. It will be appreciated that when a carcass layer 120 is utilised the internal pressure sheath is often referred to by those skilled in the art as a barrier layer. In operation without such a carcass (so-called smooth bore operation) the internal pressure sheath may be referred to as a liner. A barrier layer 110 is illustrated in Figure 1.

It is noted that the carcass layer 120 is a pressure resistant layer that provides an interlocked construction that can be used as the innermost layer to prevent, totally or partially, collapse of the internal pressure sheath 110 due to pipe decompression, external pressure, and tensile armour pressure and mechanical crushing loads. The carcass is a crush resistant layer. It will be appreciated that certain embodiments of the present invention are thus optionally applicable to 'rough bore' applications (with a carcass). Aptly the carcass layer is a metallic layer. Aptly the carcass layer is formed from stainless steel, corrosion resistant nickel alloy or the like. Aptly the carcass layer is formed from a composite, polymer, or other material, or a combination of materials and components. The carcass layer is radially positioned within the barrier layer.

The pipe body includes a pressure armour layer 130 that is a pressure resistant layer that provides a structural layer that increases the resistance of the flexible pipe to internal and external pressure and mechanical crushing loads. The layer also structurally supports the internal pressure sheath. Aptly as illustrated in Figure 1 the pressure armour layer is formed as a tubular layer. Aptly for unbonded type flexible pipe the pressure armour layer consists of an interlocked construction of wires with a lay angle close to 90°. Aptly in this case the pressure armour layer is a metallic layer. Aptly the pressure armour layer is formed from carbon steel, aluminium alloy or the like. Aptly the pressure armour layer is formed from a pultruded composite interlocking layer. Aptly the pressure armour layer is formed from a composite formed by extrusion or pultrusion or deposition. The pressure armour layer is positioned radially outside an underlying barrier layer.

The flexible pipe body also includes a first tensile armour layer 140 and second tensile armour layer 150. Each tensile armour layer is used to sustain tensile loads and optionally also internal pressure. Aptly for some flexible pipes the tensile armour windings are metal (for example steel, stainless steel or titanium or the like). For some composite flexible pipes the tensile armour windings may be polymer composite tape windings (for example provided with either thermoplastic, for instance nylon, matrix composite or thermoset, for instance epoxy, matrix composite). For unbonded flexible pipe the tensile armour layer is formed from a plurality of wires (to impart strength to the layer) that are located over an inner layer and are helically wound along the length of the pipe at a lay angle typically between about 10° to 55°. Aptly the tensile armour layers are counter-wound in pairs. Aptly the tensile armour layers are metallic layers. Aptly the tensile armour layers are formed from carbon steel, stainless steel, titanium alloy, aluminium alloy or the like. Aptly the tensile armour layers are formed from a composite, polymer, or other material, or a combination of materials.

Aptly the flexible pipe body includes optional layers of tape 160 which help contain underlying layers and to some extent prevent abrasion between adjacent layers. The tape layer may optionally be a polymer or composite or a combination of materials, also optionally comprising a tubular composite layer. Tape layers can be used to help prevent metal-to-metal contact to help prevent wear. Tape layers over tensile armours can also help prevent "birdcaging".

The flexible pipe body also includes optional layers of insulation 165 and an outer sheath 170, which comprises a polymer layer used to protect the pipe against penetration of seawater and other external environments, corrosion, abrasion and mechanical damage. Any thermal insulation layer helps limit heat loss through the pipe wall to the surrounding environment.

Each flexible pipe comprises at least one portion, referred to as a segment or section, of pipe body 100 together with an end fitting located at at least one end of the flexible pipe. An end fitting provides a mechanical device which forms the transition between the flexible pipe body and a connector. The different pipe layers as shown, for example, in Figure 1 are terminated in the end fitting in such a way as to transfer the load between the flexible pipe and the connector.

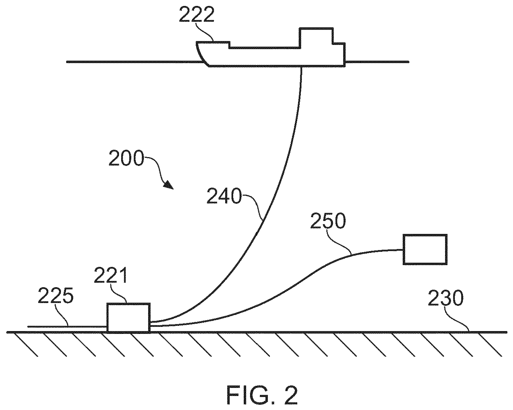

Figure 2 illustrates a riser assembly 200 suitable for transporting production fluid such as oil and/or gas and/or water from a sub-sea location 221 to a floating facility 222. For example, in Figure 2 the sub-sea location 221 includes a sub-sea flow line 225. The flexible flow line 225 comprises a flexible pipe, wholly or in part, resting on the sea floor 230 or buried below the sea floor and used in a static application. The floating facility may be provided by a platform and/or buoy or, as illustrated in Figure 2, a ship. The riser assembly 200 is provided as a flexible riser, that is to say a flexible pipe 240 connecting the ship to the sea floor installation. The flexible pipe may be in segments of flexible pipe body with connecting end fittings.

It will be appreciated that there are different types of riser, as is well-known by those skilled in the art. Certain embodiments of the present invention may be used with any type of riser, such as a freely suspended (free-hanging, catenary riser), a riser restrained to some extent (buoys, chains), totally restrained riser or enclosed in a tube (I or J tubes). Some, though not all, examples of such configurations can be found in API 17J. Figure 2 also illustrates how portions of flexible pipe can be utilised as a jumper 250.

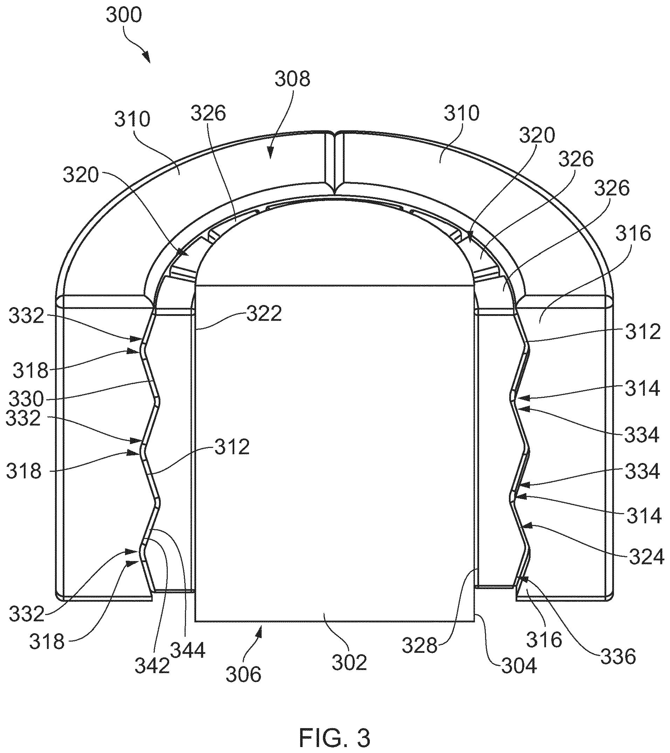

Figure 3 illustrates a clamping apparatus 300 for securing to a segment of flexible pipe body. It will be understood that Figure 3 depicts a cross-sectional perspective view of both the clamping apparatus and a section 302 of a segment of flexible pipe body and therefore only a portion of the clamping apparatus 300 and the section of flexible pipe body 302 is shown. It will be understood that the section 302 of flexible pipe body presents a substantially cylindrical outer surface 304, and the clamping apparatus 300 circumferentially extends around the section 302 of flexible pipe body and has a substantially ring-like shape. Aptly the outer-most parts of the clamping apparatus 300 may be of any other suitable shape. The clamping apparatus defines a clamp-bore 306 in which the section 302 of flexible pipe body is located when the clamping apparatus 300 is secured to the flexible pipe. It will be understood that the clamping apparatus 300 may be used to secure auxiliary apparatus such buoyancy modules, turbines, batteries, sensors, coupling apparatus and the like to a section 302 of a segment of flexible pipe body and to restrict movement/slippage of the auxiliary apparatus along the segment of flexible pipe body due to external forces. Aptly such auxiliary apparatus may itself comprise the clamping apparatus 300. Aptly the clamping apparatus 300 may be utilised as a stopper clamp/cap to limit movement of auxiliary apparatus, such as bend stiffeners, which may be axially mobile along the flexible pipe body due to mechanical failure and the like, beyond a certain point of the segment of flexible pipe body.

As shown in Figure 3, the clamping apparatus 300 includes an outer clamp portion 308. The outer clamp 308 portion includes four outer body members 310. Only two of the outer body members 310 are shown in the cross-section illustrated in Figure 3. The two outer body members 310 shown in Figure 3 are curved, being substantially arcuate, and are connected in and side-by-side arrangement at along long edges of each outer body member. It will be appreciated that the outer body members 310 are arranged, when duly secured together, such that they form a substantially ring-shaped outer clamp portion 308. It will be appreciated that the outer body members 310 may each contain a bolthole or a threaded bore for receiving securing elements such as suitably threaded screws or bolts to secure a respective end of an outer body member to a respective end of an adjacent outer body member. The outer body members 310 may therefore be securely connected by means of bolting or screwing or the like. Alternatively, the outer body members 310 may be securely connected via aramid fibre or metallic bands/ropes/cords/straps and the like. Aptly metallic or alloy straps, for example titanium straps, are utilised. Aptly any other suitable connection method of could be utilised. Aptly one or more hinge joints may be provided between two outer body members 310 permitting rotational motion of an outer body member 310 about the hinge axis with respect to the other connected outer body member 310. It will be understood that any other suitable number of outer body members 310 may be utilised. For example, two outer body members 310, each outer body member being curved and being substantially C-shaped, may be arranged to be connected at the two terminal ends of each substantially C-shaped outer body member 310 to form a substantially ring-shaped outer clamp portion 308. Alternatively, three, five or more curved, substantially arcuate outer body members 310 may be similarly connected to form a substantially ring-shaped outer clamp portion 308.

Each outer body member 310 of the outer clamp portion 308 includes an inner surface 312. When the outer body members 310 are arranged such that the outer clamp portion 308 is substantially ring-shaped, such as when secured to a section 302 of a segment of flexible pipe body in use, the inner surfaces 312 of the outer body members 310 constitute a radially inner surface of the outer clamp portion 308. As is illustrated in Figure 3, the inner surface 312 of each outer body member 310 is profiled such that the inner surface 312 is, in cross-section, substantially undulating, the undulations extending in an axis parallel to the axis defined by the clamp-bore 306, or the major axis of the section 302 of the segment of flexible pipe body. The substantially undulating inner surface 312 includes two convex flattened V-shapes 314, and flares out at either end 316 of the outer body member 310 cross-section. The peaks of the convex flattened V-shapes 314 and the flared out ends 316 of the inner surface 312 cross-section constitute the radially thickest regions of each outer body member 310. Conversely, one may instead consider that the inner surface 312 cross-section of the outer body members 310 includes an undulating profile extending parallel to the axis defined by the clamp-bore 306, and the major axis of the section 302 of the segment of flexible pipe body, comprising three convex flattened V-shapes 318. Aptly an inner surface 312 profile including any other suitable number of convex or concave flattened V-shapes 314, 318 may instead be utilised. It will be understood that the flattened V-shapes are substantially triangular profiles, the peak of the flattened V-shape having an apex angle greater than 90 degrees. Aptly the apex angle is between 90 degrees and 135 degrees. Aptly the apex angle is between 135 degrees and 180 degrees. It will be understood that the outer body members 310 are arranged such that the cross-sectional profiles of each inner surface 312 are aligned thereby providing a substantially continuous profile around the entirety of the inner surface of the outer clamp portion 308. Aptly the outer body members 310 are comprised of metallic or alloy material. Aptly the outer body members 310 are comprised of polymeric materials. Aptly the outer body members 310 are comprised of relatively low-density materials. Aptly the outer body members 310 are comprised of nylon 6, polyurethane, polyketone, low density/foamed ceramic, epoxy/thermoplastic composite or rigid elastomer material. Aptly the outer body members 310 are comprised of any other suitable material.

The clamping apparatus 300 of Figure 3 also includes an inner clamp portion 320 located radially within the outer clamp portion 308. In use, it will be understood that the inner clamp portion 320 abuts both against a section 302 of the segment of flexible pipe body against which the clamping apparatus 300 is secured via a radially inner surface 322 of the inner clamp portion 320 and against the radially inner surface of the outer clamp portion 308 via a radially outer surface 324 of the inner clamp portion 322. The inner clamp portion 322 comprises a plurality of inner body members 326 that are elongate finger-like elements 326. In the clamping apparatus 300 cross-section illustrated in Figure 3, eight finger-like elements 326 are shown. It will be appreciated that further finger-like elements 326 are included within the clamping apparatus 300 such that the inner body members 322 radially surround the clamp-bore 306, and the section 302 of the segment of flexible pipe body, in a spaced-apart arrangement. Aptly the finger-like elements 326 are not spaced-apart. Alternatively, the fingers may optionally be spaced apart circumferentially around the flexible pipe body. The clamping apparatus 300 of Figure 3 therefore includes sixteen finger-like elements 326. Aptly any other suitable number of fingers 326 may be included. Aptly the finger-like elements may be joined together via one or more connection members such as fibres, wires, cord, strands and the like or ropes or tapes comprising such, which intersect at least two finger-like elements making handling and installation easier. Aptly the connection members comprise a woven or knitted fabric material onto which the finger-like elements are cast in series, so that the series can be wrapped as an array of elements around the pipe, whereby the fabric material forms at least part of the internal surface 328 or at least some of the finger-like elements. Aptly the connection member may be a thin and flexible tape of the material of the finger-like elements which may be formed at the same time as the finger-like elements themselves, or may be a precursor to that forming process. The finger-like elements 326 are orientated such that their major elongate axis is parallel to the axis of the clamp-bore 306, and therefore parallel to the major axis of the section 302 of the segment of flexible pipe body when in use as illustrated in Figure 3. The radially inner surface of each finger-like element 328 constitutes an abutment surface for abutment against an outer layer 304, such as an outer sheath, of the section 302 of the segment of flexible pipe body located within the clamp-bore 306. Aptly this inner surface 328 may be substantially smooth to avoid damaging the outer surface 304 of the section 302 of the segment of flexible pipe body. Aptly this surface 328 may incorporate ridges, teeth, or other similar profiles to increase friction and therefore clamping efficacy. This surface 328 may be manufactured from or coated with a material that has a high co-efficient of friction. Aptly this surface 328 is substantially parallel to the axis defined by the clamp-bore 306. Aptly this surface 328 may be angled/oblique in respect of the axis defined by the clamp-bore 306. Aptly the finger-like elements 326 are comprised of metallic or alloy material. Aptly the finger-like elements 326 are comprised of polymeric materials. Aptly the finger-like elements 326 are comprised of relatively low-density materials. Aptly the finger-like elements 326 are comprised of nylon 6, polyurethane, a polyolefin monomer, polymer or copolymer, polyketone, Polyetherketone, polyetheretherketone, polyetherketoneketone, polytetrafluoroethylene, ceramic, epoxy/thermoplastic composite or rigid elastomer material. Aptly the finger-like elements 326 are comprised of any other suitable material. The finger-like elements 326 may be manufactured using any suitable mechanism as would be understood by those skilled in the art. These could include, but not be limited to, casting, injection moulding, co-injection moulding, machining and additive manufacturing.

The finger-like elements 326 each include a profiled, substantially undulating outer surface 330 comprising, in cross-section, three convex flattened V-shapes 332 in series extending parallel to the axis defined by the clamp-bore 306, and the major axis of the section 302 of the segment of flexible pipe body. Conversely, the undulating profile can be described as comprising two concave flattened V-shapes 334 in series, and inwardly tapering at each end 336 of the finger-like element 326 cross-section. Aptly any other suitable number of concave or convex flattened V-shapes 332, 334 may instead be utilised in the undulating profile of the finger-like element 326 outer surface 330. The peaks of the convex flattened V-shapes 332 thus constitute the thickest regions of the finger-like elements 326 in a radial direction when arranged concentrically in the clamping apparatus 300 with respect to the outer clamp portion 308. The peaks of the concave flattened V-shapes 336 therefore constitute the thinnest regions of the finger-like elements 326 in a radial direction when arranged concentrically in the clamping apparatus 300 with respect to the outer clamp portion 308. The flattened V-shape 332, 334 cross-sectional profile of the outer surface 330 of the finger-like elements 326 is manufactured to compliment the flattened V-shape 314, 318 cross-sectional profile of the inner surface 312 of the outer body members 310, the flattened V-shapes 314, 318, 332, 334 of the inner surface 312 of the outer body members 310 and the outer surface of the finger-like elements 326 being of substantially the same width and height.

The finger-like elements 326 are arranged radially within the outer clamp portion 308 such that each of the convex flattened V-shapes 334 of the outer surface 330 of the finger-like elements 326 sits within, in an abutting relationship with, a portion of a concave flattened V-shape 318 of the inner surface 312 of an outer body member 310 of the outer clamp portion 308. Similarly, the finger-like elements 326 are arranged such that a portion of each of the convex flattened V-shapes 314 of the inner surface 312 of the outer body members 310 sits within, in an abutting relationship with, a respective concave flattened V-shape 334 of the outer surface 330 of the finger-like elements 326. The entirety of the outer surface 330 of each finger-like element 326 is in an abutting, and mating, relationship with a complimentary portion of the inner surface 312 of an outer body member 310. The entirety of the outer surface 330 of each finger-like element 326 therefore constitutes a mating region 338. Aptly, as an alternative only a portion of the outer surface 330 of the finger-like element 326 might be in a mating relationship with a complimentary portion of the inner surface 312 of an outer body member 310 and therefore only this portion of the outer surface 330 of each finger-like element 326 constitutes a mating region 340. The portion of the complimentary inner surface 312 of the outer body member 310 in a mating relationship with the outer surface 330 of a finger-like element 326 also constitutes a mating region.

In use, when clamped around a section 302 of a segment of flexible pipe body, the abutting relationship between the finger-like elements 326 and both the section 302 of the segment of flexible pipe body and the outer body members 310 prohibits, or at least restricts, axial movement of the clamping apparatus 300 along the length of the segment of flexible pipe body. It will be appreciated that the abutting relationship between the finger-like elements 326 and both the section 302 of flexible pipe body and the outer clamp portion 308 results from the tight securement of the outer body members 310 in a side-to-side arrangement via a bolt, strap, clasp or other fastener that is a securing element. Aptly more than one bolt/strap/clasp/fastener is utilised. Aptly any other suitable method of securement can be utilised. It will be appreciated that, in use, external forces may be exerted on the clamping apparatus 300 from multiple directions. External forces may, for example, result from a collision between auxiliary apparatus and the clamping apparatus 300 due to mechanical failure and the like. External forces may, for example, also result from water motion in subsea use of a flexible pipe and the like. It will be understood that the clamping apparatus 300 may be required to restrict motion in both axial directions along the segment of flexible pipe body dependent on the nature of the external forces likely to be experienced.

When an external force is experienced by the clamping apparatus 300, a longitudinal component, with respect to the segment of flexible pipe body, of the force may act to urge the clamping apparatus 300 away from a desired longitudinal position of the segment of flexible pipe body. The convex flattened V-shapes 314 of the mating regions of the inner surface 312 of the outer body members 310 and the convex flattened V-shapes 332 of the mating regions of the outer surface 330 of the finger-like elements 326 are driven together. When driven together an angular, ramp-like, side of respective convex flattened V-shaped profile 314 of an inner surface 312 of an outer body member 310 rides up/down an axially adjacent and abutting angular, ramp-like side of a convex flattened V-shaped profile 332 of an outer surface 330 of a finger-like element 326 such that the peak of the respective convex flattened V-shaped profile 314 the outer body member 310 is axially misaligned with the peak of a radially adjacent respective concave V-shaped profile 334 of the finger-like element 326. It will be appreciated that this results in driving the finger-like element 326 radially inwards and provides a radially inwardly facing clamping force.

It will also be appreciated that opposing sides of each axially adjacent convex flattened V-shape 314, 332 will be driven together dependent on which axial direction the longitudinal component of the external force is incident on the clamping apparatus 300. For example, if a longitudinal component of an external force is incident vertically downwardly (in Figure 3) on the outer clamp portion, the bottom-facing sides 342 of the outer body member 310 convex flattened V-shapes 342 will be urged against respective top-facing sides 344 of the convex flattened V-shapes 332 of the finger-like elements 326. The bottom-facing sides 342 of the outer body member 310 convex flattened V-shapes 314 and the top-facing sides 344 of the convex flattened V-shapes 332 of the finger-like elements 326 thus constitute clamping surface regions 342, 344 which are oblique with respect to the major axis of the section 302 of the segment of flexible pipe body. It will however be appreciated that the clamping surface regions 342, 344 substantially extend in, but are oblique to, an imaginary plane defined by the major axis of the section 302 of the segment of flexible pipe body. It will be appreciated that the flared-out end region 316 of the inner surface 312 of outer body members 310 most proximate to the vertically upper surface of the clamping apparatus 300 in Figure 3 thus also constitutes a clamping surface region when force is incident in a downwardly facing direction in Figure 3. If the longitudinal component of the external force is directed from the bottom of the clamping apparatus 300 in Figure 3, it will be appreciated that the inner clamp portion 322 and the outer clamp portion 308 are driven together in an opposite direction and thus the clamping surface regions are inverted, including the flared-out end region 316 of the inner surface 312 of the outer body members 310 most proximate to the vertically lower surface of the clamping apparatus 300. Both ramp-like sides of each flattened V-shape of the mating regions of the inner surface of the outer clamp portion and the outer surface of the inner clamp portion, alongside both flared-out end regions of the mating region of the inner surface of the outer clamp portion, thus constitute clamping surface regions.

As the complimentary clamping surface regions 342, 344 of the outer clamp portion 308 and the inner clamp portion 322 are driven together, the longitudinal component of the external force, incident in an axial direction with respect to the section 302 of the segment of flexible pipe body, is substantially transferred into a radially inwardly acting compressive force by virtue of the oblique angle of the clamping surface regions 342, 344 of the flattened convex V-shape profiles 314, 332 of the outer body members 310 and the finger-like elements 326 respectively. It will be appreciated that the oblique angle of the clamping surface regions 342, 344 results in the inner clamp portion 322 being driven towards the outer surface 304 of the engaged section 302 of the segment of flexible pipe body, further increasing the clamping force exerted on the section 302 of flexible pipe body by the radially inner surface 328 of the inner body portion 322 as the longitudinal component of an external force increases. Therefore, the radially inwardly facing clamping force is dynamically variable in respect of the external force incident on the clamping apparatus 300. It will be appreciated that the load applied to the clamping apparatus 300 due to the incident external force is spread across each engaged clamping surface region 342, 344 provided by the plurality of flattened-V shapes 314, 318, 332, 334 of the outer surface 330 of the inner clamp portion 326 and the inner surface 312 of the outer clamp portion 310 which may reduce a likelihood of mechanical failure of the clamping apparatus 300. The spread of the load applied to the clamping apparatus due to the incident external force across each engaged clamping surface region 342, 344 may distribute the applied clamping force substantially uniformly over each inner finger 326 length which may reduce maximum/peak clamping pressures on the section 302 of the segment of flexible pipe body.

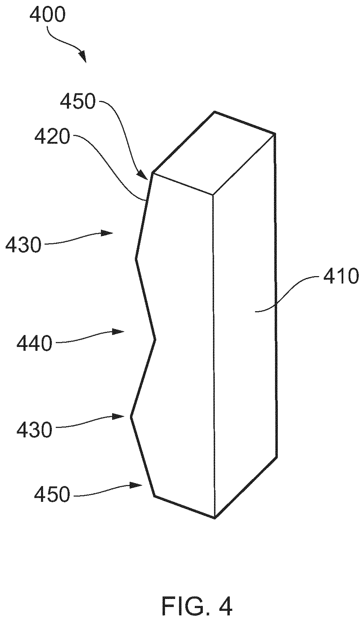

Figure 4 illustrates a further embodiment of a finger-like element 400 in a perspective view. The finger-like element 400 illustrated in Figure 4 is an inner body member. With similarity to Figure 3, a plurality of finger-like elements 400 can be arranged such that the finger-like elements 400 radially surround a section of a segment of flexible pipe body and constitute an inner body portion of a clamping apparatus. The finger-like element includes an elongate, substantially rectangular inner surface 410. When arranged to radially surround a section of flexible pipe body, the inner surface 410 of each finger-like element 400 constitutes a radially inner surface in abutment with the section of flexible pipe body. This surface may be flat or concave or, as shown in Figure 4, slightly convex. The outer surface 420 of the finger-like element is undulating in cross-section and includes two convex flattened V-shapes 430 in series. Conversely, it may be considered that the outer surface 420 of the finger-like element 400 includes one concave flattened V-shape 440 and inwardly tapers at each elongate end 450 in cross-section. It will be appreciated that associated outer body members in an outer clamp portion of a clamping apparatus utilising the finger-like elements 400 of Figure 4 would be manufactured to include an inner surface of complimentary cross-sectional profile in respect of the outer surface of the finger like-elements. Associated outer body members would therefore include an inner surface with a cross-section comprising an undulating profile including two concave flattened V-shapes in series extending parallel to a clamp-bore defined by the clamping apparatus, particularly the inner surface 410 of the finger-like elements when arranged radially. Conversely, it may be considered that the cross-sectional profile of the inner surface of associated outer body members includes one convex flattened V-shape and flares out at each end of the outer body member cross-section.

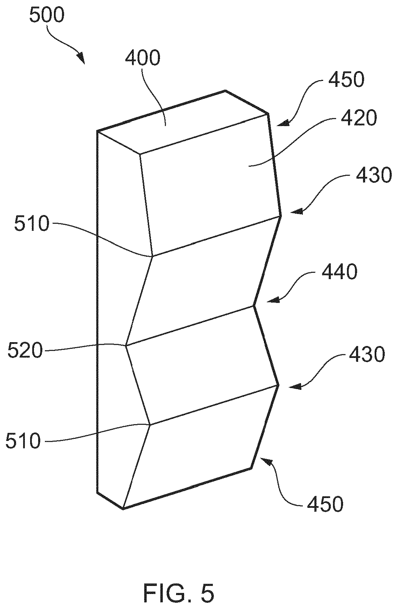

Figure 5 illustrates a further perspective view 500 the finger-like element of Figure 4. In Figure 5 the undulating outer surface 420 of the finger-like element 400 is illustrated in more detail. The outer surface 420 of the finger-like element 400 has a cross-sectional profile including two convex flattened V-shapes 430. Conversely, it may be considered that the outer surface 420 of the finger-like elements 400 cross-sectional profile includes one concave flattened V-shape 440 and inwardly tapers at each elongate end 450. The thickest region of the finger element 400 in cross-section is therefore the peaks 510 of the two convex flattened V-shapes 430. The thinnest region of the finger-like element 400 in cross-section is the elongate terminal ends 450 and the peak 520 of the concave V-shape 440.

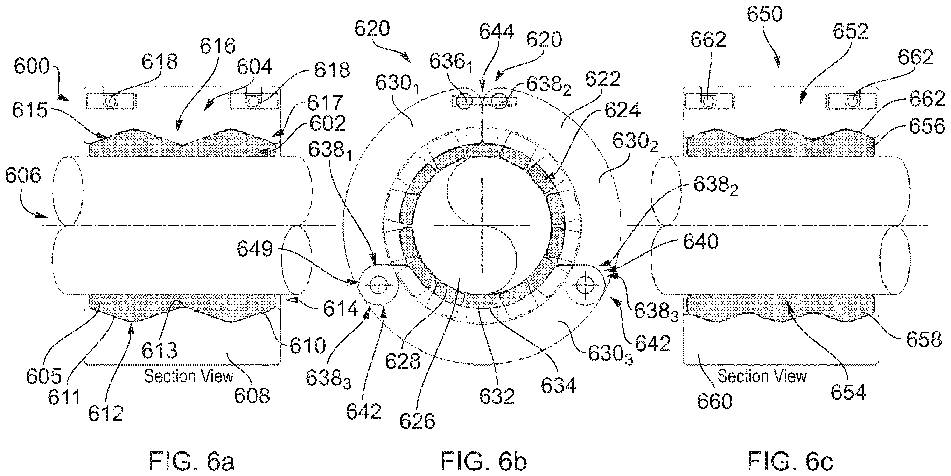

Figure 6 illustrates schematic views of an inner clamp portion and an outer clamp portion of a variety of clamping apparatus. Figure 6a illustrates a clamping apparatus 600 including an inner clamp portion 602 and outer clamp portion 604 in cross-section, in which the inner body members of the inner clamp portion are finger-like elements 605 that are similar to the finger-like elements illustrated in Figures 4 and 5. As depicted in Figure 6a, the inner clamp portion 602 and outer clamp portion 604 define a central clamp-bore 606. The clamp-bore 606 is substantially surrounded by the inner clamp portion 602 composed of the finger-like elements 605. The inner clamp portion 602 is surrounded by the outer clamp potion 604 including outer body members 608. An inner surface 610 of the outer body members 608 and an outer surface 611 of the finger-like elements 605 have complimentary undulating cross-sectional profiles. The outer surface 611 of each finger-like element includes two convex flattened V-shapes 612 in series. Conversely, it may be considered that the outer surface 611 of the finger-like element 605 includes one concave flattened V-shape 613 and inwardly tapers at each elongate end 614 in cross-section. Each outer body member 608 includes an inner surface 610 with a cross-section comprising an undulating profile including two concave flattened V-shapes 615 in series extending parallel to the axis of clamp-bore 606. Conversely, it may be considered that the cross-sectional profile of the inner surface 610 of associated outer body members 608 includes one convex flattened V-shape 616 and flares out at each end 617 of the outer body member cross-section.

The outer clamp portion 604 and the inner clamp portion 602 are arranged such that the two convex flattened V-shapes 612 of each finger-like element 605 sit in two concave flattened V-shapes 615 of an outer body member 608, the convex flattened V-shape 616 of an outer body member 608 sitting in concave flattened V-shape 613 of the finger-like element 605 and the flared out end regions 618 of the outer body members 608 extending radially inwards towards the inwardly tapering end regions 614 of the finger-like elements 605. The finger like elements 605 are therefore in a mating and abutting relationship with a respective outer body member 608. The entirety of the outer surface 611 of each finger-like element 605, and the portion of the inner surface 610 of the outer body member 608 against which the finger-like element 605 abuts thus constitute mating regions. Aptly, in an alternative embodiment only a portion of a finger-like element outer surface 605 mates with a respective portion of an outer body member 608, the mating regions therefore constituting only the complimentarily contacted portions of the finger-like 605 elements and the outer body portions 608.

Figure 6a also illustrates two bolts/screws/fasteners 618 that are securing elements for securing two outer body members 608 together. Aptly one or more screws, one of more clasps, one or more straps, or any other suitable method of securement may instead be utilised. Securing the outer body members 608 together additionally acts to urge the outer clamp portion 602 radially inwards into the inner clamp portion 602 which subsequently drives the inner clamp portion 602 onto/into a section of a segment of flexible pipe body in use thereby permitting clamping.

Figure 6b illustrates a clamping apparatus 620 including an outer clamp 622 portion and an inner clamp 624 portion from an "end on" viewpoint. The clamping apparatus illustrated in Figure 6b may be the clamping apparatus 600 of Figure 6a or Figure 6c, utilising finger-like elements 326, 400 similar to those shown in Figure 3 or Figures 4, 5 and 6a alongside complimentary outer body members 310, 608 similar to those shown in Figure 3 or Figure 6a, including complimentary inner surfaces 312, 612 similar to those shown in Figure 3 or Figure 6a. Aptly the clamping apparatus 620 may utilise any other suitable finger-like elements and complimentary outer body members. The outer clamp portion 622 and inner clamp potion 624 define a clamp-bore 626. The clamp-bore is surrounded by the inner clamp portion 624 which consists of fourteen inner body members that are finger-like elements 628, which may be referred to as fingers. The outer clamp portion 622 surrounds the inner clamp portion 624 and includes a first outer body member 630₁, a second outer body member 630₂ and a further outer body member 630₃. The finger-like elements 628 include a profiled outer surface 632 that abuts against, and mates with, a portion of a complementarily profiled inner surface 634 of a respective outer body member 630. It will be appreciated that the clamping apparatus 620 of Figure 6b is similar to the clamping apparatus 300 of Figure 3 but includes a different number of finger-like elements 628 and outer body members 630. Aptly any suitable number of outer body members 630 and finger-like elements 628 may be utilised.

Each of the three outer body members 630₁, 630₂, 630₃ are substantially arcuate, are of substantially the same length, are of substantially the same degree of curvature, and are connected to form a substantially ring-like shape. It will be appreciated that other respective dimensions could be used to circumferentially encompass the fingers and close the clamping mechanism. The first shown outer body member 630₁ includes a horizontal bolthole 636₁ proximate to a terminal end. Aptly more than one horizontal bolthole 636₁ is included. Aptly one or more horizontal threaded holes are included for receiving screws with complimentary threading. Located proximate to the remaining terminal end of the arcuate outer body member 630₁ is a vertical through-hole 638₁ axially parallel to the clamp-bore 626. The second outer body member 630₂ is substantially the same as the first outer body member, including both a vertical through-hole 638₂ and a horizontal through-hole 638₂ proximate to respective terminal ends. Aptly more than one horizontal through-hole 636₂ is included. Aptly one or more horizontal threaded holes are included for receiving screws with complimentary threading. The direction of curvature of the second outer body member 630₂ however is inverted in respect of the first outer body member 630₁. The further outer body member 630₃ instead includes a vertical through-hole at each terminal end 638₃. The first 630₁ and second 630₂ outer body members are secured to opposite terminal ends of the further outer body member 630₃, such that the first 630₁ and second 630₂ outer body members curve towards each other, by inserting a fastener 640 through the vertical through-hole 638₃ of the further outer body member 630₃ alongside the vertical through-hole 638₁, 638₂ of the first and second outer body members 630₁, 630₂ respectively, thus forming two hinge joints 642. Aptly the fastener 640 is at least one socket head cap-screw. Aptly the fastener 640 is a bolt. Aptly the fastener 640 is a stud or other cross-member. Aptly any other suitable fastener 640 can be utilised. Aptly any other suitable type of hinge joint may instead be utilised. Due to the hinge joints 642, the first and second outer body members 630₁, 630₂ are at least partially rotatable about the respective hinge axis relative to the further outer body member 630₃.

The first and second outer body members 630₁, 630₂ can be secured via their respective boltholes 636₁, 636₂ by providing a further fastener 644 through the horizontal through-holes 636₁, 636₂ and suitably tightening the further fastener 644. Aptly the further fastener 644 is a bolt. Aptly the further fastener 644 is a screw. Aptly the further fastener 644 is a socket head cap-screw. Aptly the further fastener 644 is a stud. Aptly any other suitable further fastener 644 can be utilised. The tightening of the further fastener 644 forces the inner clamp portion 624 to abut against a section of a segment of flexible pipe body when present in the clamp-bore 626 thereby securing the outer clamp portion 622 and the inner clamp portion 624 to a section of a segment of flexible pipe body. The hinge joints 642 allow for relatively convenient removal and securement of the clamping apparatus 620 to a section flexible pipe, requiring only mechanical tightening/securement between a terminal end of the first and second outer body portions 630₁, 630₂. This may additionally decrease a likelihood of mechanical failure of the clamping apparatus 620 in respect of clamping apparatus which relies on more bolts, screws, straps, clasps and the like.

Figure 6c illustrates a schematic view of a cross-section of a clamping apparatus 650 which may be the clamping apparatus of Figure 6b when the finger-like elements 326 similar to those illustrated in Figure 3 are utilised. It will be appreciated that the clamping apparatus 650 illustrated in Figure 6c may instead be the clamping apparatus 300 illustrated in Figure 3. It will be appreciated that the clamping apparatus 650 illustrated in Figure 6c may instead include any number of outer body members and finger-like elements. The clamping apparatus 650 includes an outer clamp portion 652 and inner clamp portion 654. The outer clamp portion 652 and the inner clamp portion 654 are arranged similarly to those illustrated in Figure 6a however, finger-like elements 656 making up the inner body portion 654 include a radially outer surface 658 that is similar to the finger-like element 326 outer surface 330 illustrated in Figure 3. Additionally, outer body members 660 constituting the outer clamp portion 652 include an inner surface 662 that is similar to the outer body member 310 inner surface 312 illustrated in Figure 3. With similarly to the clamping apparatus of Figures 6a and 6b, the clamping apparatus of Figure 6c also includes two fasteners 662 for securing respective end regions of two outer body members 660 together.

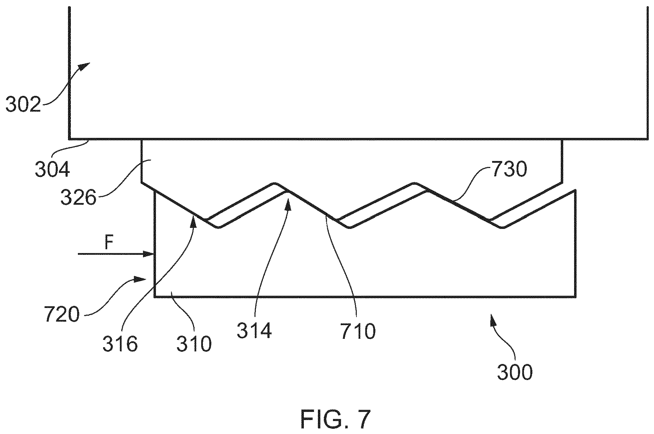

Figure 7 illustrates the abutting relationship between the finger-like elements 326 and the outer body members 310 of the clamping apparatus 300 of Figure 3 in more detail. The clamping apparatus 300 is secured radially around an outer surface 304 of a section 302 of a segment of flexible pipe body. A force F is incident on the outer body member 310 of the clamping apparatus 300 in a left-to-right direction in Figure 7 (indicated by the arrow). The right-facing angular, ramp-like sides 710 of the convex flattened V-shapes 314, alongside the radially flared-out end region 316 most proximate to the left-most surface of the clamping apparatus 720, of the outer body member 310 has ridden up/down the left-facing angular, ramp-like sides 730 of respective and axially adjacent convex flattened V-shapes 332 of the finger-like element 326. The right-facing angular, ramp-like sides 710 of the convex flattened V-shapes 314, and the radially flared-out end region 316 most proximate to the left-most surface of the clamping apparatus 720, of the outer body member 310 inner surface 312 alongside the left-facing angular, ramp-like sides 730 of the convex flattened V-shapes 332 of the finger-like element 326 outer surface 330 therefore constitute clamping surface regions 710, 720, 730. The clamping surface regions 710, 720, 730 are oblique with respect to an imaginary plane defined by the major axis of the section 302 of flexible pipe body, but substantially extend in an imaginary plane defined by the major axis of the section 302 of flexible pipe body. It will be appreciated how the engagement of the oblique clamping surface regions 710, 720, 730 urges the finger-like element 326 radially towards the section 302 of flexible pipe body.

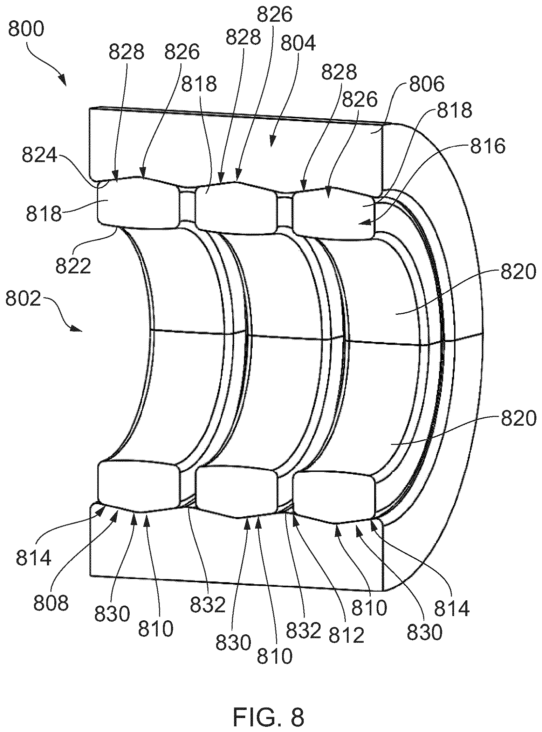

Figure 8 illustrates a cross-sectional perspective view of an alternative embodiment of a clamping apparatus 800. The clamping apparatus 800 defines a clamp-bore 802 in which a section of a segment of flexible pipe body (not shown in Figure 8) can be secured. The clamping apparatus 800 of Figure 8 includes an outer clamp portion 804 substantially similar to the outer clamp portion of Figure 3 308. Four outer body members 806 are included in the outer clamp portion 804 of the clamping apparatus 800. Aptly any other suitable number of outer body members 806 may be constitute the outer clamp portion 804. It will be appreciated that, as Figure 8 is a cross-sectional view of the clamping apparatus 800, only two of the outer body members 806 are depicted. The outer body members 806 are substantially arcuate and are in an end-to-end arrangement substantially forming ring-shape. Aptly the outer body members may be arranged similarly to the outer body members described in Figure 6b 630₁, 630₂, 630₃. Aptly two of the end-to-end connections between the outer body members 806 may constitute hinge joints and the remaining end-to-end connection between the outer body members 806 may be releasable, being secured by bolts or screws or the like. Aptly two, three, or all four of the end-to-end connections between the outer body members 806 include a bolt/screw/fastener or the like. Aptly only one of the end-to-end connections between the outer body members 806 is a hinge joint. Aptly no hinge joint is included. Aptly the outer body members are secured by bands, for example titanium bands, or straps, for example titanium straps, or the like. Aptly the outer clamp portion 804 includes only two curved outer body members 806 each being substantially C-shaped and arranged in an end-to-end arrangement to be substantially ring-shape. It will also be appreciated that the outer clamp portion 804 may instead include four substantially arcuate outer body members 806. Aptly the outer body members 806 are comprised of a metallic or alloy material. Aptly the outer body members 806 are comprised of polymeric materials. Aptly the outer body members 806 are comprised of relatively low-density materials. Aptly the outer body members 806 are comprised of nylon 6, polyurethane, polyketone, ceramic, epoxy/thermoplastic composite or rigid elastomer material. Aptly the outer body members 806 are comprised of any other suitable material.

Each outer body member 806 includes an inner surface 808 located on the radially inner surface of the outer clamp portion 804 when the outer clamp portion 804 is arranged to be substantially ring-shaped via end-to-end connection of the outer body members 806. The inner surface 808 of each outer body portion constitutes an undulating cross-sectional profile characterised by a plurality of flattened V-shapes in series extending along an axis parallel to the axis of the clamp-bore 802, and the major axis provided by a section of a segment of flexible pipe body when secured (not shown in Figure 8). It will be understood that the flattened V-shapes are substantially triangular profiles, the peak of the flattened V-shape having an apex angle greater than 90 degrees. Aptly the apex angle is between 90 degrees and 135 degrees. Aptly the apex angle is between 135 degrees and 180 degrees. The cross-sectional profile of the inner surface 808 of the outer body members 806 includes three concave flattened V-shapes 810 arranged in series. Conversely one may consider that the cross-sectional profile of the inner surface includes two convex flattened V-shapes 812 arranged in series, and flares out at each end 814 of the outer body member 806 inner surface 808 cross-section. It will be understood that any other suitable number of concave and convex flattened V-shapes 810, 812 may instead be utilised in the cross-sectional profile of the inner surface 808 of the outer body members 806. The outer body members 806 are arranged such that the profile of the inner surface 808 of each outer body member 806 is aligned thereby providing a substantially continuous profile around the entirety of the inner surface of the outer clamp portion 804.

The clamping apparatus 800 of Figure 8 also includes an inner clamp portion 816 comprising multiple inner body members that are ring-like elements 818. Three ring-like elements 818 are included in the clamping apparatus 800 of Figure 8. It will be appreciated that any other suitable number of ring-like elements 818 can be utilised dependent on a suitable cross-sectional profile of the inner surface 808 of the outer body members 806. Each ring-like element 818 is comprised of multiple arcuate ring-like portions 820 arranged in an end-to-end arrangement. The ring-like elements 818 of Figure 8 are comprised of four ring-like portions 820 (only two ring-like portions 820 are illustrated for each ring-like element 818 in the cross-sectional view provided by Figure 8). Aptly any other number of ring-like portions may constitute each ring-like element. Aptly, the ring like elements 818 are solid and do not comprise arcuate ring-like portions. Aptly each end of each ring-like portion 820 is secured to respective adjacent ends of adjacent ring-like portions by bolting, screwing, welding, gluing, or any other suitable method of securement. Aptly the ring-like elements 818 are comprised of a metallic or alloy material. Aptly the ring-like elements 818 are comprised of polymeric materials. Aptly the ring-like elements 818 are comprised of relatively low-density materials. Aptly the ring-like elements 818 are comprised of nylon 6, polyurethane, a polyolefin monomer, polymer or copolymer, polyketone, Polyetherketone, polyetheretherketone, polyetherketoneketone, polytetrafluoroethylene, low density/foamed ceramic, epoxy/thermoplastic composite or rigid elastomer material. Aptly the ring-like elements 818 are comprised of any other suitable material. The ring-like elements 818 may be manufactured using any suitable mechanism as would be understood by those skilled in the art. These could include, but not be limited to, casting, injection moulding, co-injection moulding, machining, and additive manufacture.

Each ring-like element 818 includes a radially inner surface 822 and a radially outer surface 824. The radially inner surface 822 of the ring-like elements 818 constitutes an abutment surface for abutment against an outer layer of a segment of flexible pipe body (not shown in Figure 8). The inner surface 822 of the ring-like elements 818 is very slightly arcuate, curving radially inwards. Aptly the inner surface 822 of the ring-like elements 818 may be smooth so as to reduce damaging the outer surface of a section of a segment of flexible pipe body or may include a ridged or toothed profile to increase clamping efficiency. The outer surface 824 of each ring-like element 818 constitutes an abutment surface for abutment against the profiled inner surface 808 of a respective outer body member 806. The outer surface 824 of each ring-like element 818 has a convex single flattened V-shaped 826 cross-sectional profile. The outer surface 824 of each ring-like element 818 could instead include a plurality of flattened V-shapes in cross-section. The height and width of the convex single flattened V-shaped profile 826 of the outer surface 824 of the ring-elements 818 is manufactured to compliment the concave flattened V-shapes 810 of the inner surface 808 of the outer body members 806.

The inner clamp portion 816 is arranged radially inside of the outer clamp portion 804 such that the ring-like elements 818 are arranged in series along the axis defined by the clamp bore 802, the ring-like elements 818 and the outer clamp portion 804 being arranged concentrically. The convex flattened V-shaped 826 outer surface 824 of each ring-like element 818 is arranged to sit inside one of the concave flattened V-shaped profiles 810 of the inner surface 808 provided by the aligned outer body members 806 of the outer clamp portion 804. The outer surface 824 of each ring-like element 818 is therefore in an abutting, and mating, relationship with a complementary portion of the inner surface 808 of the outer clamp portion 804 provided by the adjoined outer body members 806. The outer surface 824 of each ring-like element 818 therefore constitute mating regions 828. The portions of the inner surface 808 of the outer body members 806 in an abutting relationship with the ring-like elements 818 therefore also constitutes mating regions 830. The mating region 830 of the inner surface 808 of the outer body members 806 substantially encompasses the concave flattened V-shaped 810 portions of the inner surface 808 cross-section. The mating region 830 of the inner surface 808 of the outer body members 806 does not however include the peaks 832 of the convex flattened V-shaped portions 812 (but do encompass a substantial portion of each angular, ramp-like side of each convex V-shape 812) of the inner surface 808 cross-section.

Aptly adjacent ring-like elements 818 may be joined together through one or more connection members such as fibres, wires, cord, strands or ropes, or tapes comprising such, which would intersect at least two ring-like elements, making handling and installation easier. Aptly the connection members comprise a woven or knitted fabric material onto which the ring-like elements are cast in series, so that the series can be wrapped as an array of elements around and/or along the pipe whereby the fabric material forms at least part of the internal surface 822 of at least some of the ring-like elements. Aptly the connection member may be a thin and flexible tape of the material of the ring-like elements which may be formed at the same time as the ring-like elements themselves, or may be a precursor to that forming process.

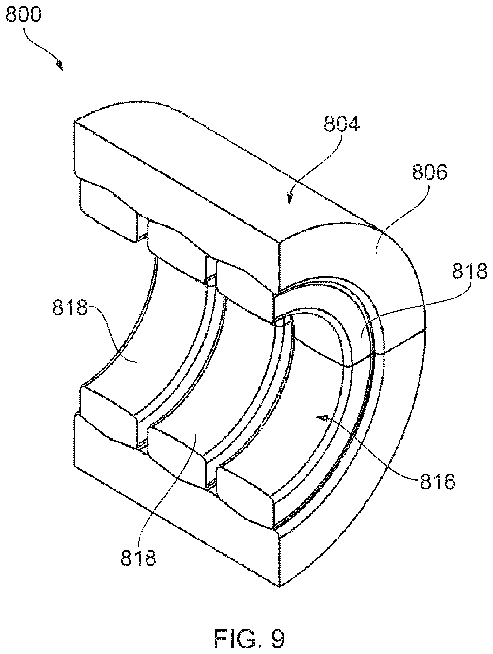

Figure 9 illustrates the clamping apparatus 800 of Figure 8 in cross-section from a different viewpoint. Figure 9 illustrates the ring-shaped outer clamp portion 804 including substantially arcuate outer body members 806 connected in an end to end arrangement. Also illustrated in Figure 9 are the three ring-like elements 818 arranged concentrically radially within the outer clamp portion 804 which constitute the inner clamp portion of the clamping apparatus 800. It can be seen in Figure 8 how the ring-like elements 818 are in and abutting and mating relationship with the outer body members 806.

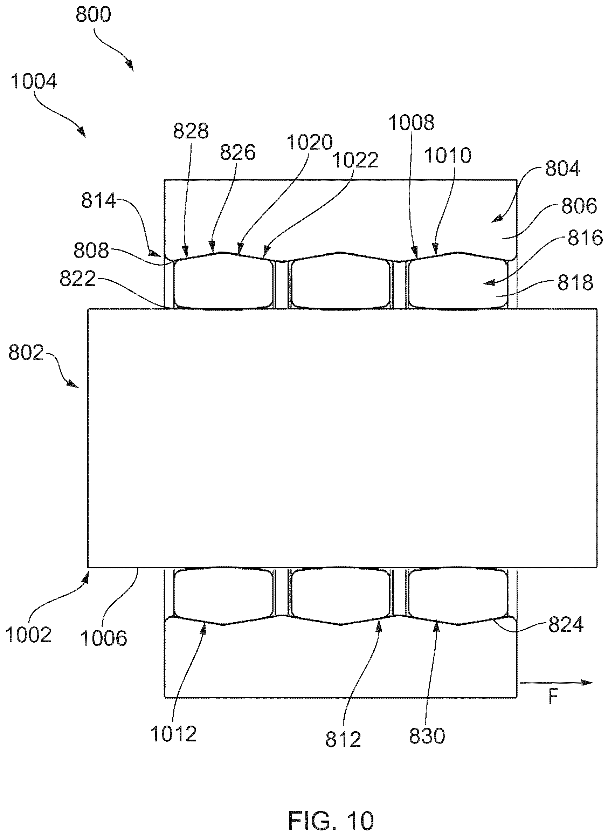

Figure 10 illustrates a cross-sectional view of the clamping apparatus of Figures 8 and 9 800 when secured to a section 1002 of segment of flexible pipe body 1004. The section 1002 of the segment of flexible pipe body provides a substantially cylindrical outer shape. As depicted in Figure 10, the section 1002 of the segment of flexible pipe body is secured in the central clamp-bore 802 of the clamping apparatus 800. The inner clamp portion 816, consisting of three ring-like elements 818 is located between the secured section 1002 of the segment of flexible pipe body and the outer clamp portion 804. The inner clamp portion 816 is in an abutting relationship with both the secured section 1002 of the segment of flexible pipe body and the outer body members 806 of the outer clamp portion 804 via the radially inner surface 822 of the ring-like elements 818 and the radially outer surface 808 of the ring-like elements respectively. It will be appreciated that the clamping apparatus 800 includes a bolt, screw, clasp, fastener, or the like, for securely connecting two outer body members 806 together in an end-to-end arrangement. Aptly the clamping apparatus 800 includes multiple bolts, screws, clasps, fasteners or the like. It will be appreciated that connecting the outer body members via bolt, screw, clasp, fastener or the like acts to tighten the clamping apparatus 800 around the section 1002 of the segment of flexible pipe body, thereby driving the inner surface 822 of the ring-like elements 818 towards, or even into, an outer layer 1006 of the section 1002 of flexible pipe body. The clamping apparatus 800 is thus secured onto the section 1002 of the segment of flexible pipe body.

In use, the abutting relationship between the ring-like elements 818 and both the section 1002 of flexible pipe body and the outer body members 806 prohibits, or at least restricts, axial movement of the clamping apparatus 800 along the length of the segment of flexible pipe body. It will be appreciated the abutting relationship between the ring-like elements 818 and both the section 1002 of flexible pipe body and the outer clamp portion 804 results from the tight securement of the outer body members 806 in an end-to-end arrangement via a bolt, screw, clasp, or the like. Aptly more than one a bolt, screw, clasp, or the like is provided. When an external force is experienced by the clamping apparatus 800, a longitudinal component, with respect to the section 1002 of the segment of flexible pipe body, of the force may act to urge the clamping apparatus 800 away from a desired longitudinal position of the segment of flexible pipe body. The mating regions 830 of the convex flattened V-shapes 812, 812 of the inner surface 808 of the outer body members 806 and the mating regions 828 of the convex flattened V-shape 826 of the outer surface 824 of respective ring-like elements 818 are driven together. When driven together an angular, ramp-like, side of respective convex flattened V-shaped profile 812 of an inner surface 808 of an outer body member 806 rides up/down an axially adjacent and abutting angular, ramp-like side of a convex flattened V-shaped profile 826 of an outer surface 824 of a ring-like element 818. It will be appreciated that this results in driving the ring-like element 818 radially inwards and provides a radially inwardly facing clamping force.

It will be appreciated that opposing sides of each convex flattened V-shape 812, 826 will be driven together dependent on which axial direction the longitudinal component of the external force is incident on the clamping apparatus 800. For example, if a longitudinal portion of the an external force F is incident on the outer clamp portion of the clamping apparatus from left to right in Figure 10, the right-facing sides 1008 of the outer body member 806 convex flattened V-shapes 812 will be urged against the left-facing side 1010 of the convex flattened V-shape 826 of respective, axially adjacent ring-like elements 818. The force F thus creates contact between the right-facing sides 1008 of the outer body member 806 convex flattened V-shapes 812 and the left-facing side 1010 of the convex flattened V-shape 826 of respective, axially adjacent ring-like elements 818. Due to axial movement of the outer body member (resulting from the incident force F) relative to the inner clamp portion from left to right (in Figure 10), gaps will tend to appear between the left-facing sides 1020 of the outer body member 806 convex flattened V-shapes 812 and the right-facing side 1022 of the convex flattened V-shape 826 of respective, axially adjacent ring-like elements 818. By contrast the right-facing sides 1008 of the outer body member 806 flattened V-shapes 812 and the left-facing sides 1010 of the flattened V-shape 826 of the ring-like elements 818 tend to be driven together and thus constitute clamping surface regions 1008, 1010 which are oblique in respect of the major axis of the section 802 of the segment of flexible pipe body, yet substantially extend in an imaginary plane defined by the major axis of the section 802 of the segment of flexible pipe body. It will be understood that the clamping surface regions are also oblique to the imaginary plane. It will be appreciated that the flared-out end region 814 of the inner surface 808 of the outer body members 806 most proximate to the left-hand-side surface of the clamping apparatus 800 in Figure 10 thus also constitutes a clamping surface region 1012. If the longitudinal component of the external force is directed from right-to-left in the clamping apparatus 800 in Figure 10, it will be appreciated that the inner clamp portion 816 and the outer clamp portion 804 are driven together in an opposite direction and thus the clamping surface regions are inverted. Therefore both ramp-like sides of each convex flattened V-shape on the mating region of the inner surface of the outer body members and the mating region of the ring-like elements, alongside both flared out end regions of the outer body members can constitute clamping surface regions 1008, 1010, 1012, 1020, 1022. The clamping surface regions are thus surface regions driven together due to external forces and that generate a clamping force due to that "coming together" action.

As the complimentary clamping surface regions of the outer clamp portion 804 and the inner clamp portion 816 are driven together, the longitudinal component of the external force F, incident in an axial direction with respect to the section 1002 of the segment of flexible pipe body, is substantially transferred into a radially inwardly acting compressive force by virtue of the oblique angle of the clamping surface regions 1008, 1010, 1012 of the flattened V-shaped profiles 812, 826 of the outer body members 806 and the ring-like elements 818 respectively. It will be appreciated that the oblique angle of the clamping surface regions 1008, 1010, 1012 results in the inner clamp portion 816 being driven towards the outer surface 1006 of the engaged section 1002 of the segment of flexible pipe body, further increasing the clamping force exerted on the section of flexible pipe body 1002 by the radially inner surface 822 of the inner body portion 816 as the longitudinal component of an external force increases. Therefore, the radially inwardly facing clamping force is dynamically variable in respect of the external force incident on the clamping apparatus 800. It will be appreciated that the load applied to the clamping apparatus 800 due to the incident external force is spread across each engaged clamping surface 1008, 1010, 1012 region provided by the plurality of flattened-V shapes 812, 826 of the outer surface 824 of the inner clamp portion 816 and the inner surface 808 of the outer clamp portion 804 which may reduce a likelihood of mechanical failure of the clamping apparatus 800.

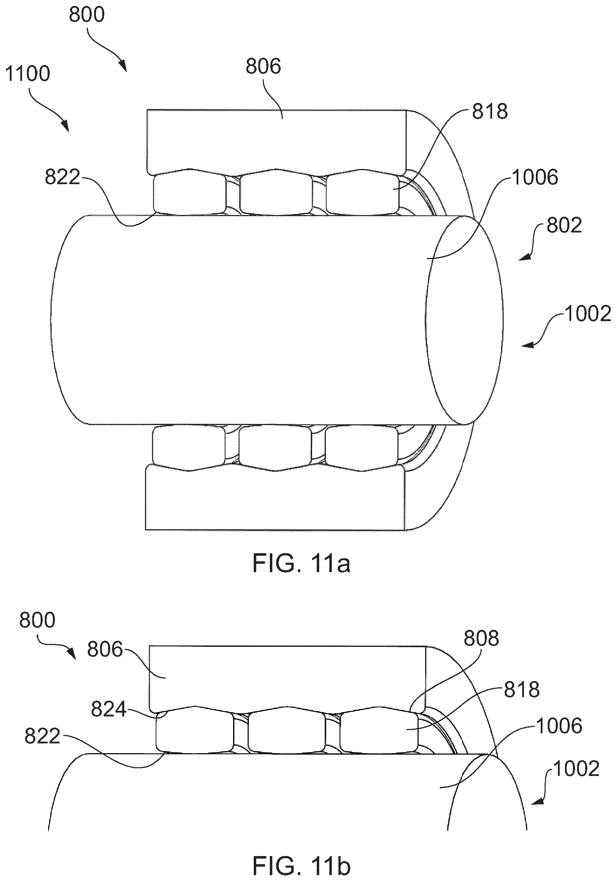

Figure 11 illustrates the clamping apparatus 800 of Figures 8, 9 and 10 in cross-section from a different viewpoint 1100. Figure 11a illustrates the substantially cylindrical outer shape provided by the outer surface 1006 of a section 1002 of a segment flexible pipe body. As can be seen in Figure 11a, the section 1002 of flexible pipe body is arranged in the clamp-bore 802 provided by the inner surfaces 822 of the ring-like elements 818. The three ring-like elements 818 are arranged in series along the axis of the clamp-bore 802 and concentrically surround the section 1002 of flexible pipe body in a spaced-apart arrangement. The outer body members 806 are arranged to radially and concentrically surround the ring-like elements 818 providing a substantially ring-shaped clamping apparatus 800.

Figure 11b illustrates the upper portion of the clamping apparatus 800 of Figures 8, 9, 10 and 11a illustrating the abutting relationship between each ring-like element 818 and both the outer surface 1006 of a section 1002 of a segment of flexible pipe body, via the inner surface 822 of each ring-like element 818, and the inner surface 808 of the outer body members 806, via the outer surface 824 of the ring-like elements 818.

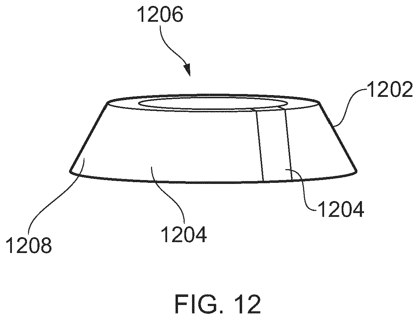

Figure 12 illustrates a further embodiment of an inner clamp portion 1202. The inner clamp portion 1202 is substantially ring-shaped and comprises two substantially arcuate inner clamp segments 1204. Aptly the inner clamp portion 1202 may comprise any suitable number of arcuate inner clamp segments 1204. Aptly the inner clamp portion comprises only one singshaped inner clamp segment 1204. The inner clamp portion defines a clamp bore 1206 into which a section of a segment of flexible pipe body may be secured in use. The inner clamp portion 1202 includes a substantially tapering radially outer surface 1208 that is oblique in respect of the axis of the clamp bore 1206 but extends substantially in the axial direction defined by the clamp bore 1206. It will be appreciated that, in use, the outer surface of the inner clamp portion abuts against, and mates with, a complimentarily tapering inner surface of an outer clamp portion arranged to radially surround the inner clamp portion 1202.

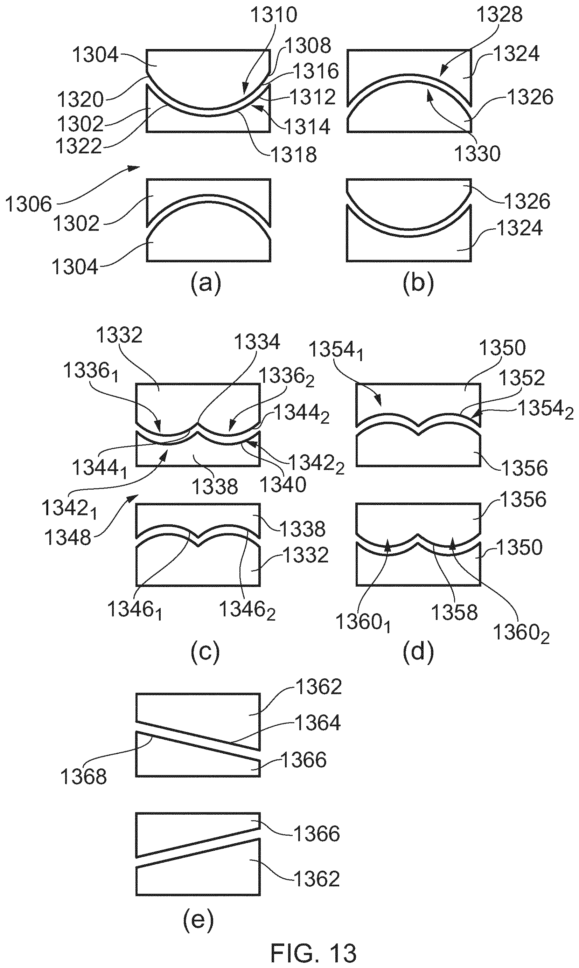

Figure 13 illustrates a variety of complimentary cross-sectional profiles which may be utilised in an outer surface of an inner body member and an inner surface of an outer body member to provide mating regions. It will be understood that any of the complimentary profiles many be utilised in an inner clamp portion which incorporates finger-like elements or ring-like elements as inner body members as discussed above. Figure 13a illustrates a cross-section of an inner body member 1302 arranged concentrically within an outer body member 1304 defining a clamp-bore 1306. The outer body member 1304 includes an inner surface 1308 with a convex, parabolic cross-sectional profile 1310. The inner body member 1302 includes an outer surface 1312 with a complimentary concave parabolic cross-sectional profile 1314. It will be understood that the parabolic surfaces 1310, 1314 of the inner body member 1302 and the outer body member 1304 constitute a mating region. It will be understood that an incident force from left-to-right in Figure 13a on the outer body member 1304 drives the right-most side 1316 of the inner surface 1308 of the outer body member 1304 and the right-most side 1318 of the outer surface 1312 of the inner body member 1302 together. The right-most side 1316 of the inner surface 1308 of the outer body 1304 member and the right-most side 1318 of the outer surface 1312 of the inner body member 1302 therefore constitute clamping surface regions that are oblique in respect of the axis of the clamp-bore 1306. It will also be understood that an incident force from right-to-left in Figure 13a on the outer body member 1304 drives the left-most side 1320 of the inner surface 1308 of the outer body member 1304 and the left-most side 1322 of the outer surface 1312 of the inner body member 1302 together. The left-most side 1320 of the inner surface 1308 of the outer body member 1304 and the left-most side 1322 of the outer surface 1312 of the inner body member 1302 therefore constitute clamping surface regions that are oblique in respect of the axis of the clamp-bore 1306. Figure 13b illustrates an outer body member 1324 and an inner body member 1326 in cross-section in which the outer body member 1324 includes an inner surface with a concave, parabolic cross-sectional profile 1328. The inner body member 1326 includes an outer surface with a complimentary convex parabolic cross-sectional profile 1330.

Figure 13c illustrates an outer body member 1332 that includes an inner surface 1334 with a cross-sectional profile including two adjoined, convex parabolas 1336₁, 1336₂. An inner body member 1338 includes an outer surface 1340 with a complimentary cross-sectional profile including two adjoined concave parabolas 1342₁, 1342₂. It will be understood that the surfaces 1334, 1340 including two adjoined parabolas 1336₁, 1336₂, 1342₁, 1342₂ of the inner body member 1338 and the outer body member 1332 constitute respective mating regions. It will be understood that an incident force from left-to-right in Figure 13c on the outer body member 1332 drives a right-most side 1344₁, 1344₂ of each convex parabolic profile 1336₁, 1336₂ of the inner surface 1334 of the outer body member 1332 and a respective right-most side 1346₁, 1346₂ of each concave parabolic profile 1342₁, 1342₂ of the outer surface 1340 of the inner body member 1338 together. The right-most side 1344₁, 1344₂ of each convex parabolic profile 1336₁, 1336₂ of the inner surface 1334 of the outer body member 1332 and the right-most side 1346₁, 1346₂ of each concave parabolic profile 1342₁, 1342₂ of the outer surface 1340 of the inner body member 1338 therefore constitute clamping surface regions that are oblique to a clamp-bore axis 1348. It will also be understood that an incident force from right-to-right in Figure 13c on the outer body member 1332 drives the left-most side of each convex parabolic profile 1336₁, 1336₂ of the inner surface 1334 of the outer body member 1332 and a respective left-hand side of each concave parabolic profile 1342₁, 1342₂ of the outer surface 1340 of the inner body member 1338 together. The left-most side of each convex parabolic profile 1336₁, 1336₂ of the inner surface 1334 of the outer body member 1332 and the left-most side of each concave parabolic profile 1342₁, 1342₂ of the outer surface 1340 of the inner body member 1338 therefore constitute clamping surface regions that are oblique to the clamp-bore axis 1348. Figure 13b illustrates an outer body member 1350 that includes an inner surface 1352 with a cross-sectional profile including two adjoined concave, parabolas 1354₁, 1354₂. An inner body member 1356 includes an outer surface 1358 with a complimentary cross-sectional profile including two adjoined convex parabolas 1360₁, 1360₂.

Figure 13e illustrates an outer body member 1362 which is substantially wedge-shaped in cross-section including a substantially slanted inner surface 1364 and an inner body member 1366 which is substantially wedge-shaped in cross-section including a substantially slanted outer surface 1368. It will be understood that the slanted inner surface 1364 of the outer body member 1362 and the slanted outer surface 1368 of the inner body member 1366 constitute mating regions. It will be understood that an incident force from right-to-left in Figure 13e on the outer body member 1362, or an incident force from left-to-right on the inner body member 1366, drives the slanted inner surface 1364of the outer body member 1362 and the slanted outer surface 1368 of the inner body member 1366 together. The slanted inner surface 1364 of the outer body member 1362 and the slanted outer surface 1368 of the inner body member 1366 thus constitute clamping surface regions.

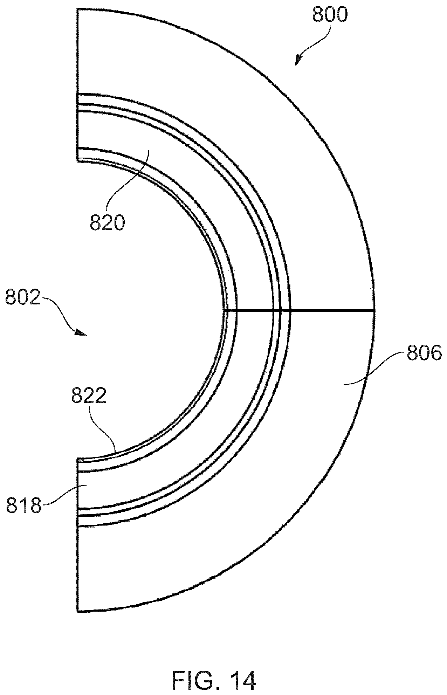

Figure 14 illustrates the clamping apparatus 800 of Figure 8 from an "end on" viewpoint. As can be seen in Figure 14, the ring-like elements 818, composing connected ring-like portions, are arranged concentrically within the outer body members 806 which are connected in a side-by-side relationship form a substantially ring-like shape. The inner surface 822 of the ring-like elements 816 defined a clamp-bore 802. It will be appreciated that only half of the clamping apparatus 800 is shown in Figure 14 and that the clamping apparatus 800 circumferentially surrounds the clamp-bore 802.

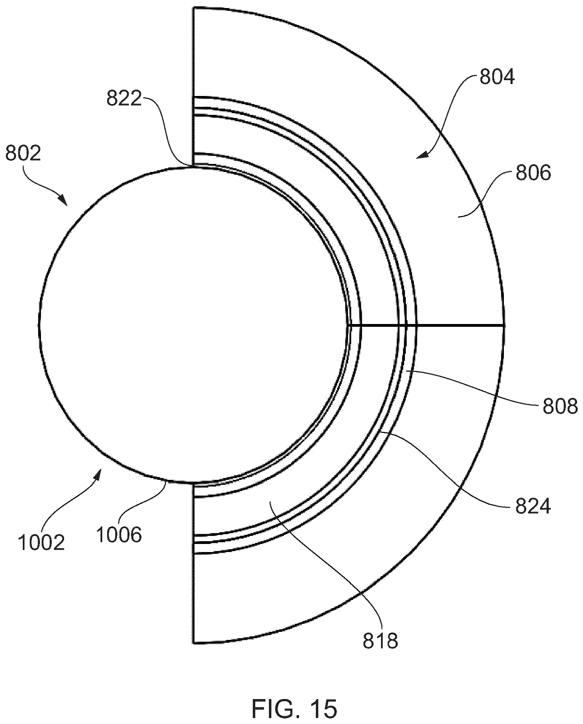

Figure 15 illustrates the clamping apparatus 800 of Figure 8 from an "end on" viewpoint when secured around the outer surface 1006 of a section 1002 of a segment of flexible pipe body. The section 1006 resides in the clamp-bore 802. The inner surface of the ring-like elements abuts against the outer surface 1006 of the section 1002 of flexible pipe. The outer surface 824 of the ring-like elements 818 abuts against an inner surface 808 of the outer body members 806. The ring like elements 818 are therefore in an abutting relationship with both the outer surface 1006 of the section 1002 of flexible pipe body and the outer body members 806 constituting the outer clamp portion 804. It will be appreciated that only half of the clamping apparatus 800 is illustrated in Figure 15 and that the clamping apparatus 800 circumferentially surrounds the section 1002 of flexible pipe body.

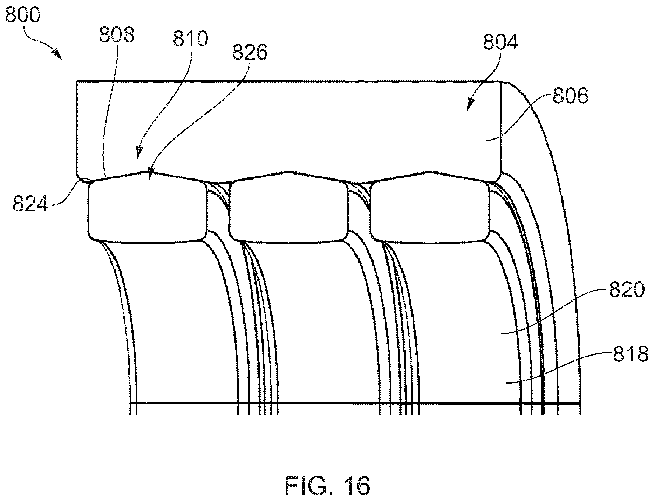

Figure 16 illustrates a further perspective viewpoint of a portion the clamping apparatus 800 of Figure 8. Figure 16 indicates how the ring-like portions 820 which make up the ring-like elements 818 are arranged within an outer body member 806 of the outer body portion 804.

As can be seen in Figure 16, the convex flattened V-shaped 806 outer surface 824 of each ring-like portion 820 sits within a respective concave flattened V-shape 810 of the inner surface 808 of the outer body member 806.

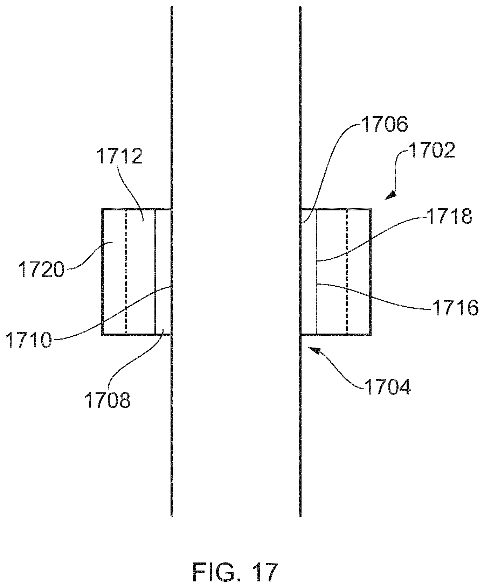

Figure 17 illustrates a buoyancy module 1702 secured around a section 1704 of a segment of flexible pipe body. The buoyancy module 1702 provides buoyancy to the 1704 section of flexible pipe body in subsea use and helps manage the profile of the flexible pipe to help limit areas of localised stress due to bending of the pipe and the like. The buoyancy module 1702 is secured to an outer surface 1706 of the section of flexible which is, for example, an outer sheath. The buoyancy module 1702 includes an inner clamp portion 1708 which is in an abutting relationship with the outer surface 1706 of the section 1704 of flexible pipe body, via an inner surface 1710 of the inner clamp portion 1708, and an outer clamp portion 1712 of the buoyancy module 1702, via an outer surface 1716 of the inner clamp portion 1708. The inner clamp portion 1708 is therefore located radially within the outer clamp portion 1712 and surrounds the section 1704 of flexible pipe body. It will be understood that the inner clamp portion 1708 may include the finger-like elements of Figures 3, 4, 5, 6, and 7 or the ring-like elements of Figures 8, 9, 10, 11, 14, 15 and 16. Alternatively any other suitable inner 1708 body portion may be utilised. The buoyancy module 1702 therefore includes a clamping apparatus which may optionally be the clamping apparatus of Figure 3 300, the clamping apparatus of Figure 6a 600, the clamping apparatus of Figure 6b 620, the clamping apparatus of Figure 6c 650 or the clamping apparatus of Figure 8 800. Alternatively, any other suitable clamping apparatus may be utilised. An inner surface 1718 of the outer clamp portion 1712 and the outer surface 1716 of the inner clamp portion 1708 are complementary profiled. These profiles may include the flattened V-shaped profiles illustrated in Figures 3, 4, 5, 6 and 7. These profiles may instead include the flattened V-shaped profiled illustrated in Figures 8, 9, 10, 11, 14, 15 and 16. Alternatively, these profiles may include any of the cross-sectional profiles illustrated in Figure 13. The profiles may include any other suitable profile. It will be understood that relative axial motion, along the major axis of the section 1704 of flexible pipe body, of the outer clamp portion 1712 with respect to the inner clamp portion 1708 forces the inner clamp portion 1708 radially inwards thereby increasing a clamping force incident on the outer surface 1706 of the section 1704 of flexible pipe body. The buoyancy module 1702 also includes compartments for the storage of buoyant materials/structures to provide buoyancy such as composites, expanded spheres, shells and the like. Aptly the buoyancy module may be a pressure vessel including gas, or other buoyant medium, to provide buoyancy. It will be understood that the buoyancy module 1702 may also include valves and the like.

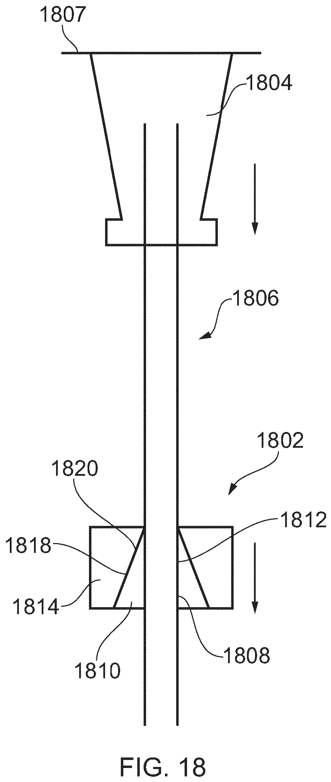

Figure 18 illustrates a stopper clamp 1802 for, for example, a bend stiffener 1804. A bend stiffener 1804 can be utilised at a top-side end of a flexible pipe installation to help to limit bending of the pipe at a terminal end which may be connected to top-side apparatus or platforms and the like. The bend stiffener 1804 surrounds an end of a segment 1806 of flexible pipe body. The bend stiffener is attached to a top-side surface 1807. The stopper clamp is located along the segment 1806 of flexible pipe body distal to the bend stiffener 1804. The stopper clamp surrounds a section 1808 of the segment 1806 of flexible pipe body. The stopper clamp 1802 includes an inner clamp portion 1810 which substantially radially surrounds the section 1808 of flexible pipe body. An inner surface 1812 of the inner clamp portion abuts against an outer surface, which may be an outer sheath, of the section 1808 of flexible pipe body. An outer clamp portion 1814 radially surrounds the inner clamp portion 1810. The stopper clamp therefore constitutes a clamping apparatus. The inner clamp portion 1808 and the outer clamp portion 1814 are substantially wedge-shaped. A slanted, ramp-like outer surface 1818 of the inner clamp portion 1810 is in an abutting, and mating, relationship with a slanted, ramp-like inner surface 1820 of the outer clamp portion 1814. The slanted, ramp-like surfaces 1818, 1820 of the inner and outer clamp portion respectively 1810, 1814 therefore constitute mating regions.

Occasionally, due to mechanical failure and the like, a bend stiffener 1804 can become detached from the top-side surface 1807 and, due to the low coefficient of friction of a flexible pipe outer sheath, can plummet axially downwards causing significant mechanical damage to the flexible pipe and associated apparatus. The axial direction of motion of the bend stiffener 1804 is indicated by the arrows. The stopper clamp 1802 helps limit the movement of the bend stiffener 1804 in such a situation. When the bend stiffener impacts the stopper clamp 1802, the outer clamp portion 1812 is axially driven in the same direction as the motion of the bend stiffener 1804 (therefore also indicated by the arrows). The inner surface 1820 of the outer clamp portion 1814 is therefore driven to ride up the outer surface 1818 of the inner clamp portion 1810. The inner clamp portion 1810 is therefore driven radially inwards further towards the section 1802 of flexible pipe body by virtue of the ramp-like mating regions 1818, 1820. The mating regions 1818, 1820 therefore constitute clamping surface regions. Axial force due to the impact between the stopper clamp 1802 and the bend stiffener 1804 is at least partially transferred into a radially inwardly facing clamping force.

It will be appreciated that the stopper clamp 1802 may instead utilise the clamping apparatus of Figure 3 300, 6a 600, 6b 620, 6c 650 including finger-like elements or Figure 8 800 including ring-like elements. It will also be appreciated that the outer surface 1818 of the inner clamp portion 1810 and the inner surface 1820 of the outer clamp portion 1814 may instead include flattened V-shaped profiles such as those illustrated in Figures 3, 4, 5, 6a, 6b, 6c and 7. These profiles may instead include the flattened V-shaped profiled illustrated in Figures 8, 9, 10, 11, 14, 15 and 16. Alternatively, these profiles may include any of the cross-sectional profiles illustrated in Figure 13.

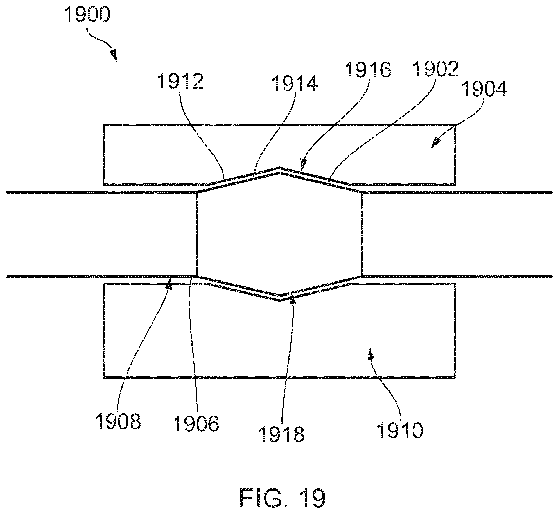

Figure 19 illustrates a further buoyancy module 1900 including a clamping apparatus. The buoyancy module 1900 includes an inner clamp portion 1902 and an outer clamp portion 1904. The inner clamp portion 1902 may be a single ring-like element similar to those illustrates in Figure 8. Aptly the inner clamp portion may include multiple ring-like elements. The inner clamp portion may instead include any number of the the finger-like elements illustrated in Figures 3, 4, 5, 6 and 7. Alternatively, the inner clamp portion may include any of the profiles illustrated in Figure 13 (the outer clamp portion therefore including a complimentary profile). The inner clamp portion surrounds and abuts against an outer surface 1906 of a section 1908 of a segment of flexible pipe body. An outer clamp portion 1904 radially surrounds the inner clamp portion 1902. The outer clamp portion itself includes buoyant material/structures 1910 to provide buoyancy to the buoyancy element 1900. The buoyant material/structures may be such as composites, expanded spheres, shells and the like.

A radially inner surface 1912 of the outer clamp portion 1904 abuts against a radially outer surface 1914 of the inner clamp portion 1902. The radially inner surface 1912 of the outer clamp portion 1904 includes a concave flattened V-shape 1916. It will be understood that the flattened V-shapes are substantially triangular profiles, the peak of the flattened V-shape having an apex angle greater than 90 degrees. Aptly the apex angle is between 90 degrees and 135 degrees. Aptly the apex angle is between 135 degrees and 180 degrees. The radially outer surface 1914 of the inner clamp portion 1902 includes a convex flattened V-shape 1918. The flattened V-shapes 1916, 1918 therefore constitute mating regions. It will be understood that the inner surface 1912 of the outer clamp portion 1902 and the outer surface 1914 of the inner clamp portion 1902 may include any number of complementary flattened V-shapes. It will be understood that the buoyancy module 1900 of Figure 19 may include the clamping apparatus of Figures 3, 6a, 6b, 6c or 8 wherein at least part of the outer clamp portion 1904 constitutes a buoyancy device.

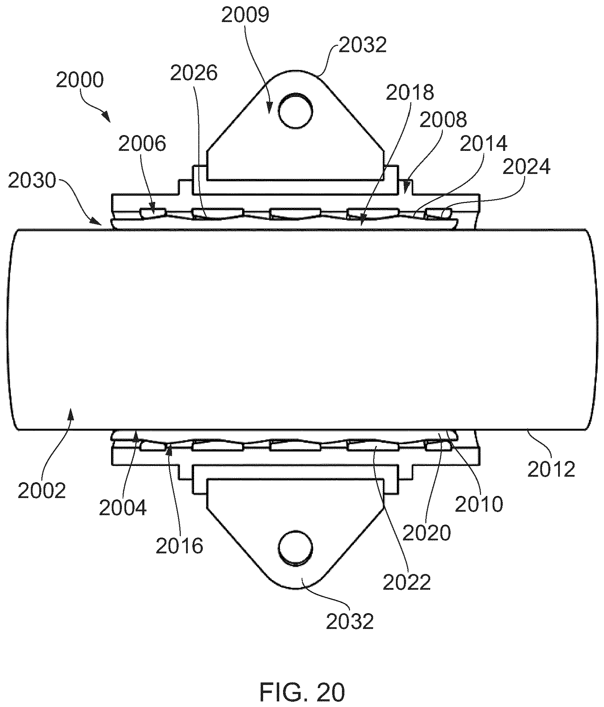

Figure 20 illustrates a swivel clamp 2000 secured around a section 2002 of flexible pipe body. It will be appreciated that the swivel clamp 2000 and section 2002 of flexible pipe body in Figure 20 are illustrated in cross section. The swivel clamp 2000 includes an inner clamp portion 2004, an outer clamp portion 2006, an outer cover 2008 and a rotating portion 2009. The inner clamp portion 2004 surrounds the section 2002 of flexible pipe body. An inner surface 2010 of the inner clamp portion abuts against the outer surface 2012 of the section 2002 of flexible pipe body. Aptly the inner surface 2010 may be smooth, concave, convex, ridged or toothed. A radially outer surface 2014 of the inner clamp portion 2004 includes an undulating profile extending in the axis defined by the section 2002 of the section of flexible pipe body. The undulating profile includes a plurality of convex flattened V-shapes 2016 and concave flattened V-shapes 2018. Aptly these shapes may include convex and concave curves. The inner clamp portion 2004 is comprised of a plurality of arcuate inner body members 2020 joined in a side-to-side configuration to form a substantially cylindrical shape. Aptly the inner body members may be ring-like elements or finger-like elements.

The outer clamp portion 2006 includes five ring-like elements 2022. Aptly any other suitable number of ring-like elements 2022 may be utilised. Aptly the outer clamp portion 2006 may include finger-like elements. Aptly the outer clamp portion 2006 may include a plurality of arcuate outer body members. The outer-most two ring-like elements 2022 are substantially wedge shaped in cross section including a slanted radially inner surface 2024. The remaining three ring-like elements 2022 are substantially triangular in cross section and include a radially inner surface with a convex flatted V-shaped profile 2026. The inner surface 2024, 2026 of each ring-like element 2022 sits within respective undulations of outer surface 2014 of the inner clamp portion 2004. The inner surface 2024, 2026 of each ring-like element 2022 therefore constitute mating regions. The portions of the concave undulations outer surface 2014 of the inner clamp portion 2004 that contact, or that are able to contact, the inner surface 2024, 2026 of the ring-like elements 2022 thus also constitute mating regions. It will be understood that the ring-like elements 2022 may be incorporated into the outer cover 2008. It will be understood that the rotating portion 2009 is able to rotate, and is held in position within a channel at the outside diameter if a portion of the outer cover/jacket 2008. It will be understood that the swivel clamp 2000 may instead utilise the clamping apparatus of Figure 3, 6a, 6b, 6c, 7 or 8. Alternatively any of the inner and outer body member illustrated in Figure 13 may be utilised.

The rotating portion 2009 of the swivel clamp 2000 radially surrounds, and is connected to the outer cover/jacket 2008. The interface between the rotating portion 2009, and the outer jacket/cover 2008 comprises a low-friction or frictionless surface which may be mediated by a low-friction material sleeve, ball-bearings or lubricant and the like. Aptly the outer surface of the outer jacket/cover and the inner surface of the rotating portion 2009 may be smooth, have a low coefficient of friction or may include suitable coatings to reduce friction. The rotating portion 2009 is therefore free to rotate about the axis defined by the section 2002 of flexible pipe body. The rotating portion 2009 is therefore free to rotate about the clamp bore 2030, the inner ring-like elements 2022, and the outer jacket/cover 2008. Optionally the outer jacket/cover 2008 is not connected to, and rotates independently of, the outer clamp portion 2006 and is unified with the rotating portion 2009. Aptly the interface between the outer jacket/cover 2008 and the outer clamp portion 2006 is frictionless or low friction. Two pad-eyes 2032 are included on radially opposed sides of the rotating portion 2009 for securement of further apparatus and/or to fixed subsea structures and the like to the swivel clamp 2000 via ropes, clasps, bands, straps, cables chains and the like, for example acting as a tether clamp. One, two or more pad-eyes could of course be alternatively provided.

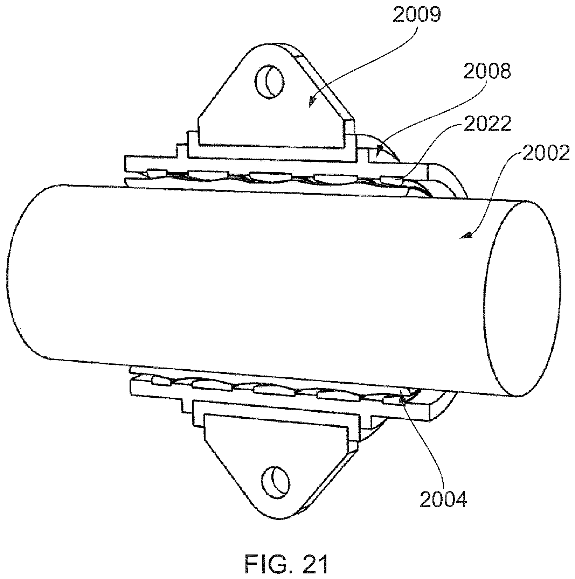

Figure 21 illustrates the swivel clamp 2000 of Figure 20 secured around a section 2002 of a segment of flexible pipe body in perspective view. Figure 21 indicates the outer jacket/cover 2008 radially surrounding the ring-like elements 2022 which radially surrounds the inner clamp portion 2004. The rotating portion 2009 The inner clamp portion 2004 is secured radially around the section 2002 of flexible pipe body.

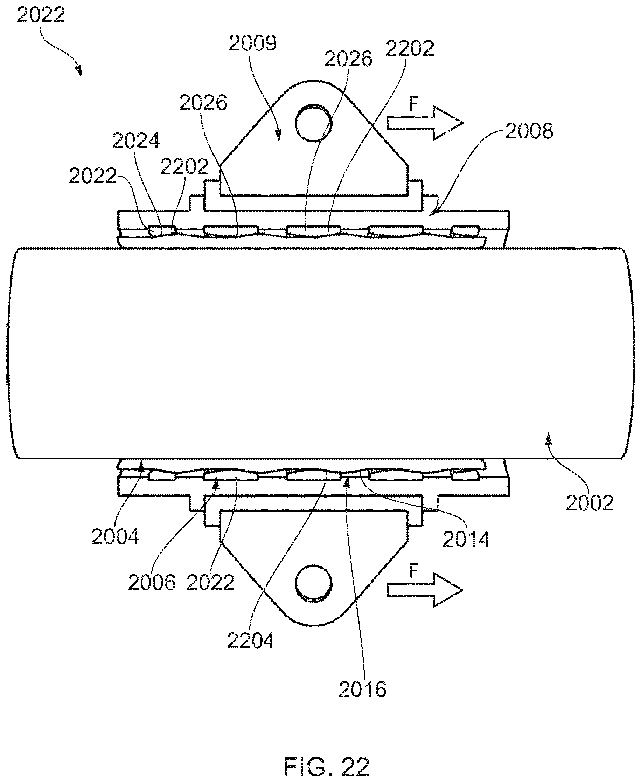

Figure 22 illustrates the swivel clamp of Figure 20 when an external longitudinal force F is incident on the clamp in a direction defined be the axis of the section of flexible pipe body 2002. The force F is incident from left to right in Figure 22. The force F axially moves the rotating portion 2009 and through the outer jacket/cover 2008, and therefore the connected outer clamp portion 2006 to the left relative to the inner clamp portion 2004. Right-facing ramp-like portions 2202 of the inner surface 2024, 2026 of the ring-like elements 2022 are therefore driven towards, and ride up, adjacent left-facing ramp-like portions 2204 of the convex undulations 2016 of the outer surface 2014 of the inner clamp portion 2004. As the outer clamp portion 2006 axially moves, the oblique angle of the ramp-like surfaces 2202, 2204 with respect to the axis defined by the section 2002 of flexible pipe body results in the inner clamp portion 2004 being forced inwards. The longitudinal force F is therefore at least partially translated into a radially inwardly facing clamping force. It will be appreciated that if the longitudinal direction of the force is inverted, opposite oblique, ramp-like portions of the inner clamp portion 2004 and outer clamp portion 2006 will be driven together and a similar clamping force will be provided radially inwardly.

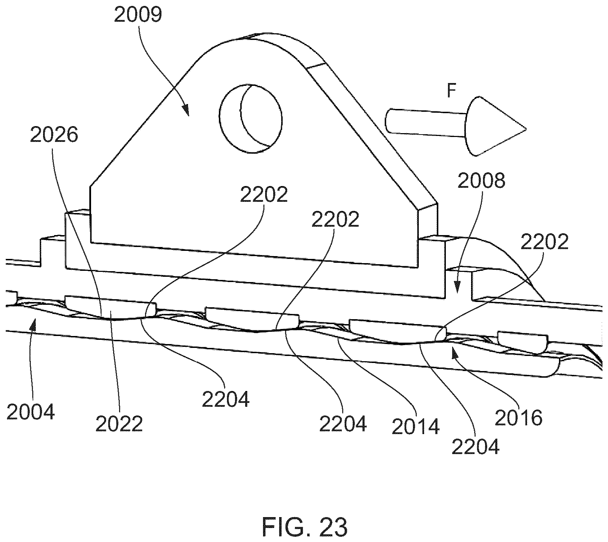

Figure 23 illustrates in perspective a section of the swivel clamp 2200 of Figure 22 in more detail. The longitudinal force F incident on the rotating portion 2009 and through the outer jacket/cover 2008 drives right-facing ramp-like portions 2202 of the inner surface 2026 of the ring like elements 2022 to ride-up adjacent left-facing ramp-like portions 2204 of the convex undulations 2016 of the outer surface 2014 of the inner clamp portion 2004.

Further applications for certain embodiments of the present invention include tether or swivel clamps, where a securing connection location on a riser, for example, is connected via a connection element, for instance a tether, chain or biasing element to a fixed subsea location, such as a gravity base or anchor pile; the securing connection incorporates a tether clamp at a predetermined located location on the riser - the so-called tether clamp provides a mechanism by which the connection element can be attached, such as a pad-eye. A D-ring or such like can be connected through the pad-eye and through which the tether/chain or biasing element can also be secured. The forces through the tether clamp restrain the riser in a desired position and thereby create the preferred shape for the riser in the water, ensuring the design life of the riser is achieved. The tether clamp thus maintains its position on the riser at the desired location, and is able to transfer various static and dynamic forces between the fixed subsea location and the riser, via the tether/chain/biasing element. The swivel clamp is similar to the tether clamp but provides a mechanism by which the connection can be rotated to align with the tether/chain/biasing element and the fixed subsea location and providing a more flexible connection arrangement with a degree of rotational freedom with respect to the riser.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith.

## Claims

1. Apparatus (300, 800) for securing to an outer surface of a segment of flexible pipe body, the apparatus comprising:
an outer clamp portion (308, 804) locatable around a region of flexible pipe body and comprising a plurality of outer body members (310, 806) that each include an inner surface (312, 808); and
an inner clamp portion (320, 816), locatable in an abutting relationship between the outer clamp portion (308, 804) and said flexible pipe body, comprising a plurality of inner body members (326, 818) that each comprise an outer surface (330, 824) that comprises a mating region that has a shape that mates with a shape of a corresponding mating region of the inner surface of the outer clamp portion (308, 804); wherein
each mating region comprises at least one clamping surface region that in an imaginary plane that extends through and includes a primary axis of the flexible pipe body, is locatable oblique to the primary axis when the inner clamp portion (320, 816) is between the outer clamp portion (308, 804) and the flexible pipe body;
**characterized in that** each clamping surface region comprises at least one flattened V-shaped (314, 318, 332, 334, 810, 812) surface.

2. The apparatus as claimed in claim 1, further comprising:
each clamping surface region comprises at least a portion of a lateral surface of a truncated right circular cone.

3. The apparatus as claimed in claim 1 or claim 2, further comprising:
each inner body member comprises a ring-like element (818) comprising, in cross section, an inside surface that is flat or gently arcuate for abutting against an outer surface of the flexible pipe body and providing a cylindrical or generally cylindrical abutment surface.

4. The apparatus as claimed in any preceding claim, further comprising:
each inner body member comprises a ring-like element (818) comprising, in cross section, an outside surface that is inclined and constantly flares outwards from a first edge of the ring-like element to a remaining edge of the ring-like element.

5. The apparatus as claimed in any one of claims 1 to 3, further comprising:
each inner body member comprises a ring-like element (818) comprising, in cross section, an outside surface that is V-shaped having a thinner thickness at respective edges of the ring-like element and a greatest thickness at a central region of the ring-like element.

6. The apparatus as claimed in any one of claims 1 to 3, further comprising:
each inner body member comprises a ring-like element (818) comprising, in cross section, an outside surface comprising a plurality of flattened V-shaped surfaces.

7. The apparatus as claimed in any one of claims 3 to 6, further comprising:
each ring-like element (818) comprises a plurality of arcuate ring portions locatable end-to-end in a circle and the combined outer surface of each ring portion provides said an outer surface.

8. The apparatus as claimed in claim 1 or claim 2, further comprising:
each inner body member comprises a finger-like element (326) aligned substantially parallel to the primary axis of the flexible pipe comprising, in cross section, an inside surface that is flat or gently arcuate for abutting against an outer surface of the flexible pipe body.

9. The apparatus as claimed in claim 8, further comprising:
each inner body member comprises a finger-like element (326) comprising, in cross section, an outside surface that is inclined and constantly flares outwards from a first end of the finger-like element to a remaining end of the finger-like element.

10. The apparatus as claimed in claim 8, further comprising:
each inner body member comprises a finger-like element (326) comprising, in cross section, an outside surface that is V-shaped having a thinner thickness at respective ends of the finger-like element and a greatest thickness at a central region of the finger-like element or that comprises an undulating-shaped surface.

11. The apparatus as claimed in any preceding claim, further comprising:
at least one securing element for securing a first outer body member (310, 806) to a further outer body member and, as the first and further outer body members are secured together, squeezing the inner clamp portion (320, 816) between the outer clamp portion (308, 804) and the flexible pipe body.

12. The apparatus as claimed in claim 11, further comprising:
at least one still further outer body member, disposed circumferentially between the first and further outer body members, each pivotally connected to two adjacent outer body members.

13. The apparatus as claimed in claim 1 or claim 2, further comprising:
each outer body member comprises a ring-like element comprising, in cross section, an inside surface that is inclined and constantly flares outwards from a first edge of the ring-like element to a remaining edge of the ring-like element.

14. The apparatus as claimed in claim 1 or claim 2, further comprising:
each outer body member comprises a ring-like element comprising, in cross section, an inside surface that is V-shaped having a thinner thickness at respective edges of the ring-like element and a greatest thickness at a central region of the ring-like element.

15. The apparatus as claimed in claim 1 or claim 2, further comprising:
each outer body member comprises a ring-like element comprising, in cross section, an inside surface comprising a plurality of flattened V-shaped surfaces.

16. A buoyancy module (1702) comprising the apparatus as claimed in any preceding claim, further comprising at least one buoyancy element secured to the outer clamp portion, or comprising the outer clamp portion.

17. A stopper clamp (1802), swivel clamp (2000) or tether clamp comprising the apparatus as claimed in any one of claims 1 to 15.

18. A method of securing to an outer surface of a segment of flexible pipe body at a desired longitudinal position along the flexible pipe body, the method comprising the steps of:
providing an apparatus according to any of claims 1 to 15; providing the inner clamp portion (320, 816), comprising a plurality of inner body members (326, 818), in an abutting relationship with a cylindrical surface of a segment of flexible pipe body;
providing the outer clamp portion (308, 804), comprising a plurality of outer body members (310, 806), around the inner clamp portion (320, 816); and
as the outer body members (310, 806) are provided around the inner clamp portion (320, 816) urging clamping surface regions of the inner and outer body members that are oblique to a primary axis of the flexible pipe body into an abutting mating relationship
**characterized in that** each clamping surface region comprises at least one flattened V-shaped (314, 318, 332, 334, 810, 812) surface.

19. The method as claimed in claim 18, further comprising:
as the outer clamp portion (308, 804) is urged in an axial direction away from a desired longitudinal position on the flexible pipe body, inhibiting axial motion via opposed clamping surface regions that are driven together via the urging force thereby transferring axial force into radially inwards compressive force to effectively clamp the inner and outer clamp portions at said desired position.

20. The method as claimed in claim 18 or claim 19, further comprising:
providing the inner body members by locating a plurality of ring-like elements (818) around the flexible pipe body in a coaxial spaced apart relationship.

21. The method as claimed in claim 18 or claim 19, further comprising:
providing the inner body members by locating a plurality of finger-like elements (818) side-by-side circumferentially around the flexible pipe body.

22. The method as claimed in any one of claims 18 to 21, further comprising:
subsequent to the outer clamp portion (308, 804) being secured around the inner clamp portion (320, 816) at a desired longitudinal position, urging opposed inclined surfaces of opposed clamping surface regions of the inner and outer body members to ride along each other thereby urging at least one of the inner body members against an outer sheath of the flexible pipe body.

23. The method as claimed in claim 22, further comprising:
simultaneously urging a plurality of opposed clamping surface regions together along an axial extent of the inner and outer clamp portions thereby spreading out a radially inwards exerted clamping force caused by axial force being applied to the outer clam portion.

24. The method as claimed in any one of claims 18 to 23, further comprising:
applying a preload pressure to the inner and outer clamp portions by securing a first outer body member to a further outer body member around a segment of flexible pipe body thereby securing the inner and outer clamp portions at a desired longitudinal position.

## Patentansprüche

1. Einrichtung (300, 800) zum Sichern an einer Außenoberfläche eines Segments eines flexiblen Rohrkörpers, die Einrichtung umfassend:
einen äußeren Klemmabschnitt (308, 804), der um einen Bereich des flexiblen Rohrkörpers herum anordenbar ist und eine Vielzahl von äußeren Körperteilen (310, 806) umfasst, die jeweils eine Innenoberfläche (312, 808) einschließen; und
einen inneren Klemmabschnitt (320, 816), der in einer Anschlagbeziehung zwischen dem äußeren Klemmabschnitt (308, 804) und dem flexiblen Rohrkörper anordenbar ist, umfassend eine Vielzahl von inneren Körperteilen (326, 818), die jeweils eine Außenoberfläche (330, 824) umfassen, die einen Passbereich umfasst, der eine Form aufweist, die mit einer Form eines entsprechenden Passbereichs der Innenoberfläche des äußeren Klemmabschnitts (308, 804) zusammenpasst; wobei
jeder Passbereich mindestens einen Klemmoberflächenbereich umfasst, der in einer imaginären Ebene, die sich durch eine Hauptachse des flexiblen Rohrkörpers erstreckt und diese einschließt, schräg zu der Hauptachse anordenbar ist, wenn sich der innere Klemmabschnitt (320, 816) zwischen dem äußeren Klemmabschnitt (308, 804) und dem flexiblen Rohrkörper befindet;
**dadurch gekennzeichnet, dass** jeder Klemmoberflächenbereich mindestens eine abgeflachte V-förmige (314, 318, 332, 334, 810, 812) Oberfläche aufweist.

2. Einrichtung nach Anspruch 1, ferner umfassend:
jeder Klemmoberflächenbereich umfasst mindestens einen Abschnitt einer seitlichen Oberfläche eines geraden Kreiskegelstumpfes.

3. Einrichtung nach Anspruch 1 oder 2, ferner umfassend:
jedes innere Körperteil umfasst ein ringähnliches Element (818), umfassend, im Querschnitt, eine Innenoberfläche, die flach oder leicht gekrümmt ist, zum Anschlagen an einer Außenoberfläche des flexiblen Rohrkörpers und Bereitstellen einer zylindrischen oder im Wesentlichen zylindrischen Anschlagfläche.

4. Einrichtung nach einem der vorstehenden Ansprüche, ferner umfassend:
jedes innere Körperteil umfasst ein ringähnliches Element (818), umfassend, im Querschnitt, eine Außenoberfläche, die geneigt ist und sich von einer ersten Kante des ringähnlichen Elements zu einer verbleibenden Kante des ringähnlichen Elements hin stetig nach außen erweitert.

5. Einrichtung nach einem der Ansprüche 1 bis 3, ferner umfassend:
jedes innere Körperteil umfasst ein ringähnliches Element (818), umfassend, im Querschnitt, eine Außenoberfläche, die V-förmig ist, die eine geringere Dicke an den jeweiligen Kanten des ringähnlichen Elements und eine größte Dicke in einem zentralen Bereich des ringähnlichen Elements aufweist.

6. Einrichtung nach einem der Ansprüche 1 bis 3, ferner umfassend:
jedes innere Körperteil umfasst ein ringähnliches Element (818), umfassend, im Querschnitt, eine Außenoberfläche, umfassend eine Vielzahl abgeflachter V-förmiger Oberflächen.

7. Einrichtung nach einem der Ansprüche 3 bis 6, ferner umfassend:
jedes ringartige Element (818) umfasst eine Vielzahl von gekrümmten Ringabschnitten, die Ende an Ende in einem Kreis anordenbar sind, und die kombinierte Außenoberfläche jedes Ringabschnitts stellt eine Außenoberfläche bereit.

8. Einrichtung nach Anspruch 1 oder 2, ferner umfassend:
jedes innere Körperteil umfasst ein fingerartiges Element (326), das im Wesentlichen parallel zu der Hauptachse des flexiblen Rohrs ausgerichtet ist, umfassend, im Querschnitt, eine Innenoberfläche, die flach oder leicht gekrümmt ist, zum Anschlagen an einer Außenoberfläche des flexiblen Rohrkörpers.

9. Einrichtung nach Anspruch 8, ferner umfassend:
jedes innere Körperteil umfasst ein fingerartiges Element (326), umfassend, im Querschnitt, eine Außenoberfläche, die geneigt ist und sich von einem ersten Ende des fingerartigen Elements zu einem verbleibenden Ende des fingerartigen Elements hin stetig nach außen erweitert.

10. Einrichtung nach Anspruch 8, ferner umfassend:
jedes innere Körperteil umfasst ein fingerartiges Element (326), umfassend, im Querschnitt eine Außenoberfläche, die V-förmig ist, die eine geringere Dicke an den jeweiligen Enden des fingerartigen Elements und eine größte Dicke in einem zentralen Bereich des fingerartigen Elements aufweist oder das eine wellenförmige Oberfläche umfasst.

11. Einrichtung nach einem der vorstehenden Ansprüche, ferner umfassend:
mindestens ein Sicherungselement zum Sichern eines ersten äußeren Körperteils (310, 806) an einem weiteren äußeren Körperteil und zum Pressen des inneren Klemmabschnitts (320, 816) zwischen dem äußeren Klemmabschnitt (308, 804) und dem flexiblen Rohrkörper, wenn das erste und das weitere äußere Körperteil aneinander gesichert werden.

12. Einrichtung nach Anspruch 11, ferner umfassend:
mindestens ein weiteres Außenkörperelement, das in Umfangsrichtung zwischen dem ersten und dem weiteren Außenkörperelement eingerichtet ist, das jeweils mit zwei benachbarten Außenkörperelementen schwenkbar verbunden ist.

13. Einrichtung nach Anspruch 1 oder 2, ferner umfassend:
jedes äußere Körperteil umfasst ein ringähnliches Element, umfassend, im Querschnitt, eine Innenoberfläche, die geneigt ist und sich von einer ersten Kante des ringähnlichen Elements zu einer verbleibenden Kante des ringähnlichen Elements hin stetig nach außen erweitert.

14. Einrichtung nach Anspruch 1 oder 2, ferner umfassend:
jedes äußere Körperteil umfasst ein ringähnliches Element, umfassend, im Querschnitt, eine Innenoberfläche, die V-förmig ist, die eine geringere Dicke an den jeweiligen Kanten des ringähnlichen Elements und eine größte Dicke in einem zentralen Bereich des ringähnlichen Elements aufweist.

15. Einrichtung nach Anspruch 1 oder 2, ferner umfassend:
jedes äußere Körperteil umfasst ein ringähnliches Element, umfassend, im Querschnitt, eine Innenoberfläche, umfassend eine Vielzahl abgeflachter V-förmiger Oberflächen.

16. Auftriebsmodul (1702), umfassend die Einrichtung nach einem der vorstehenden Ansprüche, ferner umfassend mindestens ein Auftriebselement, das an dem äußeren Klemmabschnitt gesichert ist, oder umfassend den äußeren Klemmabschnitt.

17. Stopperklemme (1802), Drehklemme (2000) oder Halteklemme, umfassend die Einrichtung nach einem der Ansprüche 1 bis 15.

18. Verfahren zum Sichern an einer Außenoberfläche eines Segments eines flexiblen Rohrkörpers an einer gewünschten Längsposition entlang des flexiblen Rohrkörpers, das Verfahren umfassend die Schritte:
Bereitstellen einer Einrichtung nach einem der Ansprüche 1 bis 15; Bereitstellen des inneren Klemmabschnitts (320, 816), umfassend eine Vielzahl innerer Körperteile (326, 818), in einer Anschlagbeziehung mit einer zylindrischen Oberfläche eines Segments des flexiblen Rohrkörpers;
Bereitstellen des äußeren Klemmabschnitts (308, 804), umfassend eine Vielzahl von äußeren Körperteilen (310, 806), um den inneren Klemmabschnitt (320, 816) herum; und
wenn die äußeren Körperteile (310, 806) um den inneren Klemmabschnitt (320, 816) herum angeordnet sind, Drücken der Klemmoberflächenbereiche der inneren und der äußeren Körperteile, die schräg zu einer Hauptachse des flexiblen Rohrkörpers verlaufen, in eine Anschlagpassungsbeziehung,
**dadurch gekennzeichnet, dass** jeder Klemmoberflächenbereich mindestens eine abgeflachte V-förmige (314, 318, 332, 334, 810, 812) Oberfläche aufweist.

19. Verfahren nach Anspruch 18, ferner umfassend:
wenn der äußere Klemmabschnitt (308, 804) in einer axialen Richtung von einer gewünschten Längsposition auf dem flexiblen Rohrkörper weg gedrückt wird, Verhindern einer axialen Bewegung über gegenüberliegende Klemmoberflächenbereiche, die durch die Druckkraft zusammengetrieben werden, wodurch eine axiale Kraft in eine radial nach innen gerichtete Kompressionskraft umgewandelt wird, um den inneren und den äußeren Klemmabschnitt wirksam an der gewünschten Position festzuklemmen.

20. Verfahren nach Anspruch 18 oder 19, ferner umfassend:
Bereitstellen der inneren Körperteile durch Anordnen einer Vielzahl ringähnlicher Elemente (818) um den flexiblen Rohrkörper herum in einer koaxialen beabstandeten Beziehung.

21. Verfahren nach Anspruch 18 oder 19, ferner umfassend:
Bereitstellen der inneren Körperteile durch Anordnen einer Vielzahl fingerartiger Elemente (818) nebeneinander in Umfangsrichtung um den flexiblen Rohrkörper herum.

22. Verfahren nach einem der Ansprüche 18 bis 21, ferner umfassend:
nachdem der äußere Klemmabschnitt (308, 804) um den inneren Klemmabschnitt (320, 816) an einer gewünschten Längsposition gesichert wurde, Drücken gegenüberliegender geneigter Oberflächen gegenüberliegender Klemmoberflächenbereiche der inneren und der äußeren Körperteile, aneinander entlang zu gleiten, wodurch mindestens eines der inneren Körperteile gegen eine Außenhülle des flexiblen Rohrkörpers gedrückt wird.

23. Verfahren nach Anspruch 22, ferner umfassend:
gleichzeitiges Zusammendrücken einer Vielzahl gegenüberliegender Klemmoberflächenbereiche entlang einer axialen Ausdehnung des inneren und des äußeren Klemmabschnitts, wodurch eine radial nach innen ausgeübte Klemmkraft verteilt wird, die durch die axiale Kraft verursacht wird, die auf den äußeren Klemmabschnitt ausgeübt wird.

24. Verfahren nach einem der Ansprüche 18 bis 23, ferner umfassend:
Ausüben eines Vorspanndrucks auf den inneren und den äußeren Klemmabschnitt durch Sichern eines ersten äußeren Körperteils an einem weiteren äußeren Körperteil um ein Segment des flexiblen Rohrkörpers herum, wodurch der innere und der äußere Klemmabschnitt in einer gewünschten Längsposition gesichert werden.

## Revendications

1. Appareil (300, 800) destiné à être fixé sur une surface extérieure d'un segment de tuyau flexible, l'appareil comprenant :
une partie collier de serrage extérieure (308, 804) pouvant être placée autour d'une région du corps de tuyau flexible et comprenant une pluralité d'éléments de corps externes (310, 806) qui comprennent chacun une surface intérieure (312, 808) ; et
une partie collier de serrage intérieure (320, 816), pouvant être placée dans une relation de butée entre la partie collier de serrage extérieure (308, 804) et ledit corps de tuyau flexible, comprenant une pluralité d'éléments de corps intérieurs (326, 818) qui comprennent chacun une surface extérieure (330, 824) comprenant une région d'accouplement qui a une forme qui s'accouple avec une forme d'une région d'accouplement correspondante de la surface intérieure de la partie collier de serrage extérieure (308, 804) ; dans lequel
chaque zone d'accouplement comprend au moins une zone de surface de serrage qui, dans un plan imaginaire qui s'étend à travers un axe primaire du corps de tuyau flexible et inclut celui-ci, peut être placée obliquement par rapport à l'axe primaire lorsque la partie collier de serrage intérieure (320, 816) se trouve entre la partie collier de serrage extérieure (308, 804) et le corps de tuyau flexible ;
**caractérisé en ce que** chaque zone de surface de serrage comprend au moins une surface en forme de V aplati (314, 318, 332, 334, 810, 812).

2. Appareil selon la revendication 1, comprenant en outre :
chaque région de la surface de serrage comprend au moins une partie d'une surface latérale d'un cône circulaire droit tronqué.

3. Appareil selon la revendication 1 ou la revendication 2, comprenant en outre :
chaque élément de corps intérieur comprend un élément en forme d'anneau (818) comprenant, en coupe transversale, une surface intérieure plate ou légèrement arquée pour venir en butée contre une surface extérieure du corps de tuyau flexible et fournir une surface de butée cylindrique ou généralement cylindrique.

4. Appareil selon l'une quelconque revendication précédente, comprenant en outre :
chaque élément de corps intérieur comprend un élément en forme d'anneau (818) comprenant, en coupe transversale, une surface extérieure inclinée et s'évasant constamment vers l'extérieur depuis un premier bord de l'élément en forme d'anneau jusqu'à un autre bord de l'élément en forme d'anneau.

5. Appareil selon l'une quelconque des revendications 1 à 3, comprenant en outre :
chaque élément de corps intérieur comprend un élément en forme d'anneau (818) comprenant, en coupe transversale, une surface extérieure en forme de V ayant une épaisseur plus fine sur les bords respectifs de l'élément en forme d'anneau et une épaisseur plus importante dans une région centrale de l'élément en forme d'anneau.

6. Appareil selon l'une quelconque des revendications 1 à 3, comprenant en outre :
chaque élément de corps intérieur comprend un élément en forme d'anneau (818) comprenant, en coupe transversale, une surface extérieure comprenant une pluralité de surfaces en forme de V aplati.

7. Appareil selon l'une quelconque des revendications 3 à 6, comprenant en outre :
chaque élément en forme d'anneau (818) comprend une pluralité de parties d'anneau arquées pouvant être placées bout à bout dans un cercle et la surface extérieure combinée de chaque partie d'anneau constitue ladite surface extérieure.

8. Appareil selon la revendication 1 ou la revendication 2, comprenant en outre :
chaque élément de corps intérieur comprend un élément en forme de doigt (326) aligné sensiblement parallèlement à l'axe primaire du tuyau flexible comprenant, en coupe transversale, une surface intérieure plate ou légèrement arquée pour venir en butée contre une surface extérieure du corps de tuyau flexible.

9. Appareil selon la revendication 8, comprenant en outre :
chaque élément de corps intérieur comprend un élément en forme de doigt (326) comprenant, en coupe transversale, une surface extérieure inclinée et s'évasant constamment vers l'extérieur depuis une première extrémité de l'élément en forme de doigt jusqu'à une autre extrémité de l'élément en forme de doigt.

10. Appareil selon la revendication 8, comprenant en outre :
chaque élément de corps intérieur comprend un élément en forme de doigt (326) comprenant, en coupe transversale, une surface extérieure en forme de V ayant une épaisseur plus fine aux extrémités respectives de l'élément en forme de doigt et une épaisseur plus grande dans une région centrale de l'élément en forme de doigt ou comprenant une surface en forme d'ondulation.

11. Appareil selon l'une quelconque revendication précédente, comprenant en outre :
au moins un élément de fixation pour fixer un premier élément de corps extérieur (310, 806) à un autre élément de corps extérieur et, lorsque le premier élément de corps extérieur et l'autre élément de corps extérieur sont fixés l'un à l'autre, pour comprimer la partie collier de serrage intérieure (320, 816) entre la partie collier de serrage extérieure (308, 804) et le corps de tuyau flexible.

12. Appareil selon la revendication 11, comprenant en outre :
au moins un autre élément de corps extérieur, disposé circonférentiellement entre le premier et les autres éléments de corps extérieurs, chacun étant relié de manière pivotante à deux éléments de corps extérieur adjacents.

13. Appareil selon la revendication 1 ou la revendication 2, comprenant en outre :
chaque élément de corps extérieur comprend un élément en forme d'anneau comprenant, en coupe transversale, une surface intérieure inclinée et s'évasant constamment vers l'extérieur depuis un premier bord de l'élément en forme d'anneau jusqu'à un autre bord de l'élément en forme d'anneau.

14. Appareil selon la revendication 1 ou la revendication 2, comprenant en outre :
chaque élément de corps extérieur comprend un élément en forme d'anneau comprenant, en coupe transversale, une surface intérieure en forme de V ayant une épaisseur plus fine sur les bords respectifs de l'élément en forme d'anneau et une épaisseur plus importante dans une région centrale de l'élément en forme d'anneau.

15. Appareil selon la revendication 1 ou la revendication 2, comprenant en outre :
chaque élément de corps extérieur comprend un élément en forme d'anneau comprenant, en coupe transversale, une surface intérieure comprenant une pluralité de surfaces en forme de V aplati.

16. Module de flottabilité (1702) comprenant l'appareil selon l'une quelconque revendication précédente, comprenant en outre au moins un élément de flottabilité fixé à la partie collier de serrage extérieure, ou comprenant la partie collier de serrage extérieure.

17. Collier d'arrêt (1802), collier de serrage pivotant (2000) ou collier de serrage d'attache comprenant l'appareil visé à l'une quelconque des revendications 1 à 15.

18. Procédé de fixation d'un segment de tuyau flexible sur une surface extérieure à une position longitudinale souhaitée le long du tuyau flexible, le procédé comprenant les étapes consistant à :
fournir un appareil selon l'une quelconque des revendications 1 à 15 ; fournir la partie collier de serrage intérieure (320, 816), comprenant une pluralité d'éléments de corps intérieurs (326, 818), dans une relation de butée avec une surface cylindrique d'un segment du corps de tuyau flexible ;
fournir la partie collier de serrage extérieure (308, 804), comprenant une pluralité d'éléments de corps extérieurs (310, 806), autour de la partie collier de serrage intérieure (320, 816) ; et
lorsque les éléments de corps extérieurs (310, 806) sont disposés autour de la partie collier de serrage intérieure (320, 816), pousser les régions de surface de serrage des éléments de corps intérieurs et extérieurs qui sont obliques par rapport à un axe primaire du corps de tuyau flexible dans une relation d'accouplement en butée
**caractérisé en ce que** chaque zone de surface de serrage comprend au moins une surface en forme de V aplati (314, 318, 332, 334, 810, 812).

19. Procédé selon la revendication 18, comprenant en outre :
lorsque la partie collier de serrage extérieure (308, 804) est poussée dans une direction axiale loin d'une position longitudinale souhaitée sur le corps de tuyau flexible, l'inhibition du mouvement axial par des régions de surface de serrage opposées qui sont poussées ensemble par la force de poussée, transférant ainsi la force axiale en une force de compression radiale vers l'intérieur pour serrer efficacement les parties collier de serrage intérieure et extérieure à ladite position souhaitée.

20. Procédé selon la revendication 18 ou la revendication 19, comprenant en outre :
la fourniture des éléments de corps intérieurs en plaçant une pluralité d'éléments en forme d'anneau (818) autour du corps de tuyau flexible dans une relation coaxiale espacée.

21. Procédé selon la revendication 18 ou la revendication 19, comprenant en outre :
la fourniture des éléments de corps intérieurs en plaçant une pluralité d'éléments en forme de doigts (818) côte à côte sur la circonférence du corps de tuyau flexible.

22. Procédé selon l'une quelconque des revendications 18 à 21, comprenant en outre :
après que la partie collier de serrage extérieure (308, 804) a été fixée autour de la partie collier de serrage intérieure (320, 816) à une position longitudinale souhaitée, pousser les surfaces inclinées opposées des régions de surface de serrage opposées des éléments de corps intérieur et extérieur à se déplacer l'une sur l'autre, poussant ainsi au moins un des éléments de corps intérieur contre une gaine extérieure du corps de tuyau flexible.

23. Procédé selon la revendication 22, comprenant en outre :
la poussée simultanément d'une pluralité de régions de surface de serrage opposées l'une contre l'autre le long d'une étendue axiale des parties collier de serrage intérieure et extérieure, répartissant ainsi une force de serrage exercée radialement vers l'intérieur causée par une force axiale appliquée à la partie extérieure de la coquille.

24. Procédé selon l'une quelconque des revendications 18 à 23, comprenant en outre :
l'application d'une pression de précontrainte sur les parties collier de serrage de serrage intérieures et extérieures en fixant un premier élément de corps extérieur à un autre élément de corps extérieur autour d'un segment du corps de tuyau flexible, fixant ainsi les parties collier de serrage de serrage intérieures et extérieures à une position longitudinale souhaitée.
